(19) Europäisches Patentamt / European Patent Office / Office européen des brevets

(11) EP 2 822 779 B1

(12) **EUROPEAN PATENT SPECIFICATION**

(45) Date of publication and mention of the grant of the patent:
**18.07.2018 Bulletin 2018/29**

(21) Application number: **13757578.3**

(22) Date of filing: **05.03.2013**

(51) Int Cl.:
***C09D 11/10*** *(2014.01)*
***C09D 11/322*** *(2014.01)*
***C08K 3/04*** *(2006.01)*
***C08K 5/18*** *(2006.01)*
***C08K 5/3417*** *(2006.01)*
***C09D 133/02*** *(2006.01)*
***C08K 5/23*** *(2006.01)*
***B41M 5/025*** *(2006.01)*
***B41M 5/03*** *(2006.01)*

(86) International application number:
**PCT/IB2013/051751**

(87) International publication number:
**WO 2013/132438 (12.09.2013 Gazette 2013/37)**

(54) **PROTONATABLE INTERMEDIATE TRANSFER MEMBERS FOR USE WITH INDIRECT PRINTING SYSTEMS**

PROTONIERBARE ZWISCHENÜBERTRAGUNGSELEMENTE ZUR VERWENDUNG MIT INDIREKTEN DRUCKSYSTEMEN

ÉLÉMENTS DE TRANSFERT INTERMÉDIAIRE PROTONABLES UTILISABLES AVEC DES SYSTÈMES D'IMPRESSION INDIRECTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:
**05.03.2012 US 201261606913 P**
**15.03.2012 US 201261611564 P**
**15.03.2012 US 201261611566 P**
**15.03.2012 US 201261611552 P**
**15.03.2012 US 201261611497 P**
**18.04.2012 US 201261635180 P**
**30.04.2012 US 201261640493 P**
**01.05.2012 US 201261640881 P**
**01.05.2012 US 201261640893 P**

(43) Date of publication of application:
**14.01.2015 Bulletin 2015/03**

(73) Proprietor: **Landa Corporation Ltd.**
**7612301 Rehovot (IL)**

(72) Inventors:
- **LANDA, Benzion**
  **7405135 Nes Ziona (IL)**
- **ABRAMOVICH, Sagi**
  **4339320 Ra'anana (IL)**
- **SORIA, Meir**
  **9354826 Jerusalem (IL)**

(74) Representative: **Harrison IP Limited**
**3 Ebor House**
**Millfield Lane**
**Nether Poppleton, York YO26 6QY (GB)**

(56) References cited:
**WO-A1-97/36210**
**US-A- 4 853 737**
**US-A- 5 733 698**
**US-A- 5 736 250**
**US-A1- 2002 102 374**
**US-A1- 2003 118 381**
**US-A1- 2005 266 332**
**US-A1- 2007 292 780**
**US-A1- 2010 247 818**
**US-B1- 6 397 034**
**US-B1- 6 586 100**

EP 2 822 779 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### FIELD AND BACKGROUND OF THE INVENTION

United States Patent No. 6,586,100 describes a fuser member whose outermost layer comprises a fluorocarbon-silicone interpenetrating network, comprising: (a) a first polymer comprising a fluorocarbon elastomer; (b) a second polymer selected from a curable polyfunctional poly($C_{(1-6)}$alkyl)siloxane polymer; a curable polyfunctional poly($C_{(1-6)}$ alkyl)arylsiloxane polymer; and combinations thereof; and (c) a functionalized polydimethylsiloxane containing amine groups.

United States Patent Application No. 2010/247818 describes an intermediate transfer media, such as a belt, that includes a first polyimide substrate layer and a second layer of a polyetherimide/polysiloxane polymer.

The invention, in some embodiments thereof, relates to the field of printing and, more particularly, to intermediate transfer members of printing systems. The invention, in some embodiments thereof, relates to the field of polymers and, more particularly, to novel elastomers.

In the art of indirect printing it is known, during a printing cycle when a specific image is printed on a specific substrate, to:

a. apply one or more inks, (each ink comprising a coloring agent in a liquid carrier) as a plurality of ink droplets to form an ink image on the image transfer surface of a release layer of an intermediate transfer member;
b. while the ink image is being transported by the intermediate transfer member, evaporate the carrier to leave an ink residue film including the coloring agents on the image transfer surfaces; and
c. transfer the residue film from the image transfer surface to the substrate (e.g., paper, cardboard, cloth), thereby printing the desired image on the substrate.

Typically, the inks are applied by to the image transfer surface by ink jetting, typically at a printing or image forming station of a printing system, although other methods of applying ink may also be used.

Typically, the residue film is transferred from the image transfer surface to the substrate at an impression station of a printing system, by engaging the intermediate transfer member with an impression cylinder.

An intermediate transfer member is typically a laminated drum or looped blanket (also referred to as a belt) the outermost layer of which, (i.e., the layer that defines the image transfer surface to which the inks are applied and from which the residue film is released to print the image on the substrate) is called the release layer.

For various reasons, it is desirable to use ink compositions including a water-based rather than organic carrier. Known image transfer surfaces of known release layers are unsuitable for printing with such ink compositions.

### SUMMARY OF THE INVENTION

The invention, in some embodiments thereof, relates to intermediate transfer members suitable for use with indirect printing systems having a release layer with an image transfer surface having protonatable functional groups apparent thereupon. Also disclosed are methods of making such intermediate transfer members. Also disclosed are novel elastomers, some useful for making intermediate transfer members.

According to an aspect of some embodiments of the invention, there is provided an intermediate transfer member for use with a printing system, comprising:

a release layer having an image transfer surface; and
the release layer attached to a body supporting the release layer,

wherein apparent on the image transfer surface are protonatable functional groups having a pKb of not more than about 6. In some embodiments, the protonatable functional groups are bonded to the image transfer surface. In some embodiments, the protonatable functional groups are covalently bonded to the image transfer surface. In some embodiments, the protonatable functional groups are functional groups of components that make up the release layer, for example functional groups of polymers that are components of an elastomer that makes up the release layer.

In some embodiments, the intermediate transfer member is a blanket-type intermediate transfer member (flexible blanket or a continuous flexible belt) and further comprises: lateral projections from sides thereof, the projections configured to engage guiding components of a suitable printing system.

In some embodiments, the intermediate transfer member is a blanket-type intermediate transfer member and further comprises: releasable fasteners at ends thereof, allowing the intermediate transfer member to be formed into a continuous flexible belt by engaging the fasteners at a first end with the fasteners at a second end of the blanket, the engaged fasteners forming a seam.

In some embodiments, the intermediate transfer member is a blanket-type intermediate transfer member, being a flexible blanket, the ends thereof being permanently secured to one another by any securing method selected from the group comprising soldering, welding, adhering, and taping, the securing method allowing the intermediate transfer member to be formed into a continuous flexible belt, the secured ends forming a seam.

In some embodiments, the intermediate transfer member is a blanket-type intermediate transfer member, being a continuous seamless flexible belt.

In some embodiments, the intermediate transfer member is a blanket-type intermediate transfer member, further comprising: markings detectable by a detector of a suitable printing system, allowing registration of the relative positioning of the intermediate transfer member when mounted on such a suitable printing system.

In some embodiments, the intermediate transfer member is a blanket-type intermediate transfer member, further comprising a component allowing: a) monitoring of data relating to the intermediate transfer member, the data entry selected from the group consisting of a catalogue number, a manufacturing date, a manufacturing batch number, a manufacturing plant identifier, a technical datasheet identifier, a regulatory datasheet identifier, and an online or remote support identifier; and/or b) recording data a suitable printing system relating to the use of the intermediate transfer member in operation, the recorded data relating to any of, the duration of use of the transfer member since installation, the number of sheets of substrate and the length of web printed using the intermediate transfer member.

According to an aspect of some embodiments of the invention, there is provided a method of preparing a release layer of an intermediate transfer member for use with a printing system, comprising:

a) forming a layer of a curable polymer composition at a thickness of between about 0.1 $\mu$m and about 120 $\mu$m, as an incipient release layer; and
b) curing the layer of curable polymer composition, thereby preparing a release layer of an intermediate transfer member,

wherein the curable polymer composition includes:
at least one silicone polymer bearing protonatable functional groups having a pKb of not more than about 6.

According to an aspect of some embodiments of the invention, there is provided an elastomer made of a cross-linked curable polymer composition comprising, as a raw ingredient prior to crosslinking: at least one silicone polymer bearing protonatable functional groups having a pKb of not more than about 6.

Unless otherwise defined, all technical and scientific terms used herein have the same meaning as commonly understood by one of ordinary skill in the art to which the invention pertains. In case of conflict, the specification, including definitions, will take precedence.

As used herein, the terms "comprising", "including", "having" and grammatical variants thereof are to be taken as specifying the stated features, integers, steps or components but do not preclude the addition of one or more additional features, integers, steps, components or groups thereof.

As used herein, the indefinite articles "a" and "an" mean "at least one" or "one or more" unless the context clearly dictates otherwise.

As used herein, when a numerical value is preceded by the term "about", the term "about" is intended to indicate +/-10%.

As used herein, curing refers to the increase in viscosity of a curable polymer composition by crosslinking of polymer chains. Although in some instances, curing is an inherent property of a suitable curable polymer composition that occurs spontaneously, in some instances curing is initiated or accelerated by the application of chemical additives, ultraviolet radiation, an electron beam or heat.

In some instances, for example in one or more of the priority documents, the terms "intermediate transfer components" or "image transfer member" or "transfer member" are used as a synonym for "intermediate transfer member".

In some instances, for example in one or more of the priority documents, the term "belt" is used as a synonym for a blanket intermediate transfer member.

In some instances, for example in one or more of the priority documents, the "body" component of an "intermediate transfer member" is termed "body portion".

Materials and chemicals were purchased from various manufacturers, that will be hereinfurther referred to by abbreviation:

| | |
|---|---|
| Gelest | Gelest Inc, Morrisville, PA, USA |
| Colcoat | Colcoat Company, Ltd., Tokyo, Japan |
| Momentive | Momentive, Columbus OH, USA |
| Evonik | Evonik Industries AG, Essen, Germany |
| Genesee | Genesee Polymers Corporation, Burton, MI, USA |

(continued)

| | |
|---|---|
| Ciba/BASF | BASF Schweiz AG, Basel, Switzerland |
| Shin-Etsu | Shin-Etsu Chemical Co. Ltd., Tokyo, Japan |
| Bluestar | Bluestar Silicones, East Brunswick, NJ, USA |
| Trelleborg | Trelleborg AB, Trelleborg, Sweden. |
| DuPont | E.I. Du Pont de Nemours and Co, Wilmington, Delaware, USA |

## BRIEF DESCRIPTION OF THE FIGURES

Some embodiments of the invention are described herein with reference to the accompanying figures. The description, together with the figures, makes apparent to a person having ordinary skill in the art how some embodiments of the invention may be practiced. The figures are for the purpose of illustrative discussion and no attempt is made to show structural details of an embodiment in more detail than is necessary for a fundamental understanding of the invention. For the sake of clarity, some objects depicted in the figures are not to scale.
In the Figures:

FIG. 1 is a schematic cross-sectional view of an embodiment of a drum-type intermediate transfer member according to the teachings herein;
FIG. 2 is a schematic cross-sectional view of an embodiment of a flexible-type intermediate transfer member according to the teachings herein;
FIG. 3 is a schematic cross-sectional view of an embodiment of a flexible-type intermediate transfer member according to the teachings herein showing layers of the body; and
FIG. 4 is a schematic cross-sectional view of an embodiment of a flexible-type intermediate transfer member according to the teachings herein showing layers of the body.

## DESCRIPTION OF SOME EMBODIMENTS OF THE INVENTION

The invention, in some embodiments thereof, relates to intermediate transfer members suitable for use with indirect printing systems having a release layer with an image transfer surface having protonatable functional groups apparent thereupon. It has been found that embodiments of such intermediate transfer members are suitable for printing with inks including an aqueous liquid carrier.

Also disclosed are methods of making such intermediate transfer members.

The principles, uses and implementations of the teachings herein may be better understood with reference to the accompanying description and figures. Upon perusal of the description and figures present herein, one skilled in the art is able to implement the invention without undue effort or experimentation. In the figures, like reference numerals refer to like parts throughout.

Before explaining at least one embodiment in detail, it is to be understood that the invention is not necessarily limited in its application to the details of construction and the arrangement of the components and /or methods set forth herein. The invention is capable of other embodiments or of being practiced or carried out in various ways. The phraseology and terminology employed herein are for descriptive purpose and should not be regarded as limiting.

Additional objects, features and advantages of the invention will be set forth in the detailed description which follows, and in part will be readily apparent to those skilled in the art from the description or recognized by practicing the invention as described in the written description and claims hereof, as well as the appended drawings. Various features and sub-combinations of embodiments of the invention may be employed without reference to other features and sub-combinations.

It is to be understood that both the foregoing general description and the following detailed description, including the materials, methods and examples, are merely exemplary of the invention, and are intended to provide an overview or framework to understanding the nature and character of the invention as it is claimed, and are not intended to be necessarily limiting.

As noted in the introduction, a stage in indirect printing methods is application of one or more inks as a plurality of ink droplets on the image transfer surface of a release layer of an intermediate transfer member, e.g., by ink jetting.

As a result of momentum, each (presumably close to spherical) ink droplet flattens upon impact with the image transfer surface. Subsequently, the surface tension and cohesion of the ink composition together with the hydrophobic properties of the image transfer surface causes each droplet to adopt a more spherical shape to reduce the area of contact with the image transfer surface of the release layer. This more spherical shape is considered to be at least a contributory reason for suboptimal printing results observed under certain conditions.

Applicant hypothesized that superior printing results (e.g., as expressed in terms of ink-dot sharpness and/or optical density of the image printed in the substrate) are obtainable if the droplets retain a more flattened shape than a more spherical shape. Although not wishing to be held to any one theory, it is believed that advantages resulting from a flattened droplet shape arise, *inter alia,* from better evaporation of the carrier (due to the greater droplet surface area to unit volume) and formation of a more even ink residue film.

Applicant has discovered that it is possible to at least temporarily retain the flattened droplet shape by using a chargeable aqueous ink compositions together with a chargeable image transfer surface, allowing the above effect to be utilized so that a printing process is devoid of a step of pre-treating the image transfer surface with chemical agents which would otherwise be necessary, prior to application of the ink, to counter the tendency of the thin film formed by each ink droplet to contract and to form a globule on the image transfer member.

Any suitable ink composition may be used, but typically such ink compositions include a coloring agent and an organic polymeric resin in an aqueous carrier, the ink composition having at least one proton-donating component. Exceptionally suitable such ink compositions are described hereinbelow as well as in the co-pending PCT patent application No. PCT/IB2013/051755 (WO 2013/132439) of the Applicant, which was filed on the same day as the present application.

During a printing cycle, the ink droplets are applied to the image transfer surface in the usual way. As a result of momentum, the ink droplets flatten on impact with the image transfer surface. A proton-transfer occurs from the proton-donating components of the ink (that becomes negatively charged) to the chargeable image transfer surface (that becomes positively charged). Without desiring to discuss potential reasons or mechanisms therefore, this charging apparently slows down the ink droplet's contraction to a more spherical shape, so that the ink droplets retain a more flattened and less spherical shape for a longer time. This longer time provides sufficient time for the aqueous carrier to be evaporated sufficiently so that the formed ink residue film is distributed over a greater surface area of the image transfer surface as if the droplet had adopted a more flattened shape. It has been found that all other things being equal, in some embodiments such ink residue film distribution provides superior printing results.

Applicant further developed methods of printing that included, prior to application of the ink droplets, pretreatment of the image transfer surface by application of a proton-accepting chemical layer to the image transfer surface, as described in detail in the Applicant co-pending PCT patent application No. PCT/IB2013/000757 (WO 2013/132339), which was filed on the same day as the present application.

Although providing excellent printing results, such methods require the added pretreatment step that may be considered disadvantageous in some applications. Accordingly, Applicant hereby discloses an intermediate transfer member having a protonatable image transfer surface.

*Intermediate Transfer Member*

Thus, according to an aspect of some embodiments of the teachings herein, there is provided an intermediate transfer member for use with a printing system, comprising:

a release layer having an image transfer surface; and
the release layer attached to a body supporting the release layer,

wherein apparent on the image transfer surface are protonatable functional groups having a pKb of not more than about 6. The release layer is any suitable thickness. In some embodiments, the release layer is from about 0.1 μm to about 120 μm thick, in some embodiments from about 1 μm to about 50 μm, in some embodiments from about 5 μm to about 20 μm, and in some embodiments even from about 8 μm to about 15 μm thick, e.g., about 10 μm thick.

It has been found that superior printing results are obtained when using such an intermediate transfer member to print using ink compositions as described above. Without wishing to be held to any one theory, it is believed that in a manner analogous to that hypothesized above, proton-transfer occurs from proton-donating components of applied ink droplets to the protonatable functional groups apparent on the image transfer surface. The consequent positive charge of the surface and/or negative charge of components in the ink droplets causes the applied ink droplets to retain a more flattened shape for a longer time, in some embodiments apparently, a time sufficient for evaporation of substantial proportions of the aqueous ink carrier, which in some embodiments is apparently enough to provide the observed superior printing results.

In some embodiments, the protonatable functional groups are bonded to the image transfer surface.

In some embodiments, the protonatable functional groups are covalently bonded to the image transfer surface.

In some embodiments, the protonatable functional groups are functional groups of components that make up the release layer, for example functional groups of polymers that are components of an elastomer that makes up the release layer. As is discussed in greater detailed hereinbelow, release layers made from elastomers of cured standard curable polymer compositions including standard commercially available polymers serendipitously proved to have properties suitable for use as release layers (e.g., abrasion resistance, resilience, smoothness) but also the correct balance of surface properties (e.g., hydrophobicity) and functional group properties (e.g., surface concentration) to implement the teachings herein.

It is important to note that it was initially expected that the protonatable functional groups of polymers would tend to be solvated inside the bulk of the elastomer, leading to an insufficient surface concentration of the functional groups on the surface.

It is also important to note that it was initially expected that subsequent to evaporation of the aqueous carrier, the charged components of the ink composition would form salts with the protonatable functional groups and that such salts would render release of the ink residue film to the substrate impossible. Instead, it was found that the protonation is substantially fully-reversible. Without wishing to be held to any one theory, since the aqueous carrier gradually evaporates during the printing process, with the greatest proportion of carrier at the image forming station and the lowest at the impression station, it is hypothesized that the concentration of aqueous carrier at the image forming station is sufficient to enable protonation of the protonatable groups (e.g., amino groups) of the polymer, while being too low, due to evaporation, to maintain protonation at the impression station, such that the protonated protonatable groups transfer the proton (to become uncharged) to components of the ink residue film (to become uncharged), allowing release of the residue film to the substrate.

*pKb of image transfer surface*

In some embodiments, the protonatable functional groups have a pKb of not more than about 5.

In some embodiments, the protonatable functional groups have a pKb of not less than about 1. In some embodiments, the protonatable functional groups have a pKb of not less than about 2.

In some embodiments, the protonatable functional groups have a pKb of not less than about 1 and not more than about 6. In some embodiments, the protonatable functional groups have a pKb of not less than about 2 and not more than about 5.

*Hydrophobicity of image transfer surface*

As noted above, the image transfer surface is preferably hydrophobic. Hydrophobicity is expressed in terms of apparent contact angle that is measured in the usual way using a goniometer, such as commercially available from ramé-hart instrument company, Succasunna, New Jersey, USA.

In some embodiments, the image transfer surface has an apparent contact angle of not less than about 90°, not less than about 95°, not less than about 100° and even not less than about 105°. In some embodiments, the image transfer surface has an apparent contact angle of not more than about 140°, not more than about 130°, not more than about 120° and even not more than about 115°. In some embodiments, the image transfer surface has an apparent contact angle of between about 90° and about 120°, between about 100° and about 120°, and even between about 105° and about 115°, e.g., about 110°.

Although not wishing to be held to any one theory, it is believed that such hydrophobicity provides a balance to the forces caused by the charged components of the ink composition interacting with the charged image transfer surface to achieve the desired result.

*Surface concentration of protonatable functional groups*

The surface concentration of protonatable functional groups on the image transfer surface is any suitable concentration that provides the desired results.

It is currently believed that in some embodiments, the image transfer surface has a surface concentration of not less than about $1 \times 10^5$ of the protonatable functional groups per micrometer$^2$, in some embodiments not less than about $1 \times 10^6$ of the protonatable functional groups per micrometer$^2$, and in some embodiments even not less than about $1 \times 10^7$ of the protonatable functional groups per micrometer$^2$.

It is also currently believed that in some embodiments, the image transfer surface has a surface concentration of not more than about $1 \times 10^{23}$ of the protonatable functional groups per mm$^2$.

The surface concentration of protonatable functional groups can be determined in any usual way, and typically depends at least partially on the identity of the functional groups of a specific image transfer surface. One approach includes applying a reagent that binds to the specific protonatable functional groups that includes a quantitatively-determinable function. The reagent is applied to the image transfer surface, excess removed, and the amount of quantitatively-determinable functions is determined, for instance using fluorometry to quantitatively determine fluorescent functions, or radiation detection to quantitatively determine radioactive functions (e.g., a DTPA-$^{111}$In function).

For example, when the protonatable functional groups are primary amines, a reagent including a fluoraldehyde

portion that binds to primary amines and a quantitatively-determinable function (e.g., a fluorescent or radioactive function) is suitable. For example, when the protonatable functional groups are primary or secondary amines, a reagent including a ninhydrin or FMOC-C1 portion that binds to primary and secondary amines and a quantitatively-determinable function (e.g., a fluorescent or radioactive function) is suitable. Other reagents, suitable for the same or other protonatable functional groups can be made and used without undue experimentation by a person having ordinary skill in the art.

*Types of protonatable functional groups*

Any suitable protonatable functional groups may be used in implementing the teachings herein. In some embodiments, an image transfer surface includes a single type of protonatable functional group. In some embodiments, an image transfer surface includes a combination of two or more different types of protonatable functional groups.

In some embodiments, the protonatable functional groups comprise protonatable functional groups including at least one nitrogen atom. In some such embodiments, the protonatable functional groups comprise protonatable functional groups selected from the group consisting of primary amines, secondary amines (including, *inter alia,* indoles, purines, imidazoles), tertiary amines (including, *inter alia,* pyridines, purines, guanidines, imidazoles), amides and ureas.

In some embodiments, the protonatable functional groups comprise protonatable functional groups selected from the group consisting of primary amines and secondary amines.

*Nature of release layer*

The release layer is fashioned of any suitable material.

Similar to the known in the art, in some embodiments a release layer is advantageously fashioned from an elastomer, especially a silicone elastomer.

In some embodiments, the release layer is fashioned of an elastomer made of a cross-linked curable polymer composition having as a raw ingredient prior to crosslinking: at least one silicone polymer bearing protonatable functional groups having a pKb of not more than about 6.

<u>Method of Making an Intermediate Transfer Member</u>

According to an aspect of some embodiments of the teachings herein, there is also provided a method of preparing a release layer of an intermediate transfer member for use with a printing system, comprising:

a) forming a layer of a curable polymer composition at a thickness of between about 0.1 μm and about 120 μm, as an incipient release layer; and
b) curing the layer of curable polymer composition

thereby preparing a release layer
wherein the curable polymer composition comprises at least one silicone polymer bearing protonatable functional groups having a pKb of not more than about 6.

In some embodiments, the layer of curable polymer composition is formed at a thickness of from about 1 μm to about 50 μm, from about 5 μm to about 20 μm, and in some embodiments even about 8 μm to about 15 μm. The thus-formed incipient release layer, upon curing, becomes the desired release layer. The required thickness of curable polymer composition can be applied using any suitable method, for example by use of a Meyer rod.

*Direct bonding to the body without adhesive*

In some embodiments, the method further comprises:

providing a body of an intermediate transfer member having a surface;
forming the layer of curable polymer composition directly on the surface of the body so that subsequent to the curing, the release layer is directly attached to the surface of the body, without an adhesive.

In some such embodiments, as the curable polymer composition cures, covalent bonds are formed between components of the curable polymer composition and groups found on the surface of the body of the intermediate transfer member. As discussed hereinbelow, in some such embodiments, an adhesion promoter is added to the curable polymer composition to increase the number of such bonds formed with the surface of the body.

In some embodiments, for example in some embodiments where the body comprises a cured rubber surface (room temperature vulcanization RTV and RTV2, liquid silicone LSR, Vinyl Methyl Silicone (VMQ), Phenyl Silicone

Rubber (PMQ, PVMQ), fluorosilicone rubber (FMQ, FMVQ)), alkyl acrylate copolymer rubbers (ACM), ethylene propylene diene monomer rubber (EPDM), fluoroelastomer polymers (FKM), nitrile butadiene rubber (NBR), ethylene acrylic elastomer (EAM), and hydrogenated nitrile butadiene rubber (HNBR), the release layer is directly adherable to the rubber layer without the use of an adhesive layer, especially when the composition comprises an adhesion promoter.

*Bonding to the body using adhesive*

In some embodiments, even when the body comprises a cured rubber surface as described above, it is desired to bond the release layer to the body using an adhesive.

In some embodiments, the method further comprises:

providing a body of an intermediate transfer member having a surface;
forming a layer of an adhesive on the surface of the body; and
forming the layer of curable polymer composition on the adhesive layer

so that subsequent to the curing, the release layer is attached to the surface of the body, through an adhesive layer. In some such embodiments, as the curable polymer composition cures, covalent bonds are formed between components of the curable polymer composition and components of the adhesive. As discussed hereinbelow, in some such embodiments, an adhesion promoter is added to the curable polymer composition to increase the number of such bonds formed with the adhesive.

In some embodiments, a layer of an adhesive composition is first applied to the surface of the body of the intermediate transfer member, and subsequently the curable polymer composition is applied on the layer of the adhesive composition. The required thickness of adhesive and/or fluid curable polymer composition can be applied using any suitable method, for example by spraying or with the use of a Meyer rod.

In some embodiments, an adhesive layer is first cured (partially or completely) before application of a curable polymer composition. In some embodiments, a fluid curable polymer composition is applied on an uncured adhesive layer.

Any suitable adhesive may be used. In some embodiments, an adhesive used is an adhesive known in the art, see for example, US Patent 3,697,551; US Patent 4,401,500; US 2002/0197481; and US 2008/0138546 and PCT Patent Publications WO2002/094912 and WO2010/042784. In some embodiments, an adhesive used is as described in co-pending PCT patent application of the Applicant No. PCT/IB2013/051743 (WO 2013/132432), which was filed on the same day as the present application.

In some embodiments, the adhesive is a composition comprising an organosilane and a material that generates free radicals upon activation. In some embodiments, the adhesive composition is selected from the group consisting of a thermally-activated adhesive composition and a UV-activated adhesive composition.

In some embodiments, organosilane is an aminosilane, such as, for example, Dynasylan® AMEO (3-Aminopropyltriethoxysilane) or Dynasylan® AMMO (3-Aminopropyl-trimethoxysilane), or mixture thereof, both from Evonik.

In some embodiments, the material that generates free radicals upon activation generates free radicals upon thermal-activation, for example, an azidosilane, such as, for example, azidosulfonylhexyltriethyoxysilane. In a preferred embodiment, the adhesive composition is a blend of 3-Aminopropyltriethoxysilane or 3-Aminopropyltrimethoxysilane and an azido silane, such as, for example, Azidosulfonyl-hexyltriethyoxysilane. More preferably, the adhesive composition comprises 95% (w/w) 3-Aminopropyltriethoxysilane (such as Dynasylan® AMEO) or 3-Aminopropyltrimethoxysilane (such as Dynasylan® AMMO) and 5% (w/w) azido silane.

In some embodiments, the material that generates free radicals upon activation generates free radicals upon UV-activation is a photoinitiator, for example, a benzophenone derivative, or 2-hydroxyl-2-methyl-1-phenyl-1-propanol photoinitiator (Darocur 1173 from Ciba/BASF).

*Curing*

The curing of the layer of the curable polymer composition may be performed in any suitable manner, for example as known in the art of polymer curing.

In some embodiments, curing is performed at room temperature (i.e., at a temperature of not more than 40°C, preferably not more than 30°C) for extended period of times, e.g., at least 24 hours. It is generally believed that only such long and slow curing provides an elastomer with sufficient abrasion resistance to serve as a release layer.

Applicant has surprisingly found that in some embodiments curing can be substantially accelerated by curing while heating, and still provide an elastomer suitable for use as a release layer. Thus, in some embodiments, curing the layer of the curable polymer composition comprises: maintaining the layer at an elevated temperature of between about 70°C and about 160°C for a period of time of at least about 5 minutes. In some embodiments, the temperature is between about 80°C and about 150°C, and even between about 130°C and about 145°C, e.g., 140°C. In some embodiments,

the period of time is at least about 1 hour. In some embodiments, the period of time is not more than about 6 hours, not more than about 4 hours and even not more than about 2 hours.

In some, preferred embodiments, prior to the maintaining the layer of the curable polymer composition at the elevated temperature, the layer is maintained at a temperature of not greater than about 40°C (preferably not more than about 35°C and even not more than about 30°C) for a period of time of at least about 1 hour, but not more than about 6 hours, not more than about 4 hours, not more than about 4 hours, and in some embodiments, not more than about 2 hours. In some embodiments, the period of time is at least about 12 hours and even at least about 72 hours.

Curable Polymer Composition

As noted above, in some embodiments, a release layer according to the teachings herein is fashioned of an elastomer made of a cross-linked curable polymer composition having as a raw ingredient prior to crosslinking: at least one silicone polymer bearing protonatable functional groups having a pKb of not more than about 6.

As noted above, in some embodiments the method of making a release layer according to the teachings herein comprises forming a layer of a curable polymer composition as an incipient release layer, wherein the curable polymer composition comprises at least one silicone polymer bearing protonatable functional groups having a pKb of not more than about 6.

*Types of silicone polymers*

In some embodiments, the release layer is fashioned of an elastomer made of a cross-linked curable polymer composition having as a raw ingredient prior to crosslinking: at least one silicone polymer bearing protonatable functional groups having a pKb of not more than about 6. In some embodiments, the protonatable functional groups of the silicone polymer have a pKb of not more than about 5. In some embodiments, the protonatable functional groups of the silicone polymer have a pKb of not less than about 1. In some embodiments, the protonatable functional groups of the silicone polymer have a pKb of not less than about 2.In some embodiments, the protonatable functional groups of the silicone polymer have a pKb of not less than about 1 and not more than about 6. In some embodiments, the protonatable functional groups of the silicone polymer have a pKb of not less than about 2 and not more than about 5.

In some embodiments, the curable polymer composition includes a single type of silicone polymer bearing the protonatable functional groups. In some embodiments, the curable polymer composition includes a combination of at least two different types of silicone polymer bearing the protonatable functional groups. In some embodiments, a given type of such silicone polymer includes a single type of protonatable functional group. In some embodiments, a given type of such silicone polymer includes at least two different types of protonatable functional group.

Typically, the curable polymer composition includes any suitable amount of the silicone polymers bearing the protonatable functional groups. In some embodiments, the silicone polymers bearing protonatable functional groups make up between about 2% and about 98% by weight of the curable polymer composition.

In some embodiments, the protonatable functional groups of the silicone polymers comprise protonatable functional groups including at least one nitrogen atom.In some such embodiments, the protonatable functional groups comprise protonatable functional groups selected from the group consisting of cyclic, primary amines, secondary amines (including, *inter alia,* indoles, purines, imidazoles), tertiary amines (including, *inter alia,* pyridines, purines, guanidines, imidazoles), amides and ureas.

*Amino functional silicone polymers*

In some embodiments, at least one of the silicone polymers is an amino-functional silicone polymer so that the protonatable functional groups include amines. In some such embodiments, amino-functional silicone polymers make-up between about 2% and about 98% by weight of the curable polymer composition.

*Amine number of curable polymer composition*

Curable polymer compositions including amino-functional polymers can be characterized by an amine number a measure of the concentration of amine functional groups in a composition. An amine number is a number indicating the amount in milliliters of 0.1N HCl needed to neutralize the amine functional groups of 10 grams of tested composition. In some embodiments, the curable polymer composition has an amine number of between about 10 and about 250. In some embodiments, the curable polymer composition has an amine number of at least about 30, in some embodiments at least about 40 and even in some embodiments of at least about 44.

*Specific examples of suitable polymers*

Any suitable single amino-functional silicone polymer or combination of amino-functional silicone polymers may be used in implementing a curable polymer composition according to the teachings herein.

In some embodiments, at least one of the amino-functional silicone polymers making up a curable polymer composition according to the teachings herein is selected from the group consisting of: an amino-functional polydialkysiloxane, for example an amino-functional polydimethylsiloxane; an amino-functional polyalkyarylsiloxane, for example an amino-functional polymethylphenylsiloxane; an amino-functional polydiarysiloxane, for example an amino-functional polydiphenylsiloxane; a copolymer methylaminoalkyl dialkyl polysiloxane; an amino-functional alkoxy-functional polydialkylsiloxane; and combinations thereof.

In some embodiments, at least one of the amino-functional silicone polymers making up a curable polymer composition according to the teachings herein is selected from the group consisting of:

a. a pendant amine/dimethyl copolymer of formula I, in some embodiments where x is an integer between 58 and 118, and y is an integer between 4 and 11, such as commercially-available GP4 and GP316 (Genesee) and AMS-132 (Gelest):

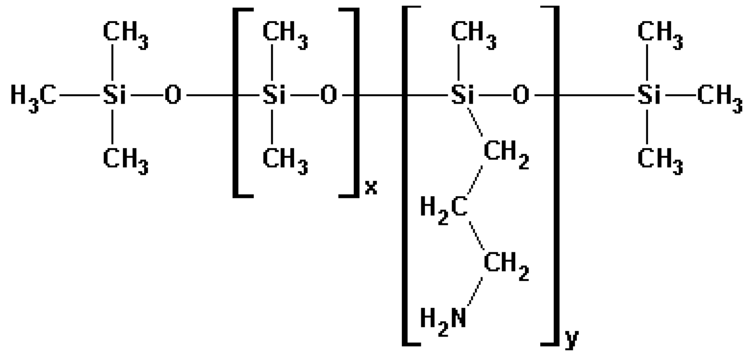

**Formula I**

b. an amine-terminated polydimethyl siloxane of formula II, in some embodiments where x is an integer between 10 and 700, such as commercially-available GP965 (Genesee) and DMS-A12 (Gelest):

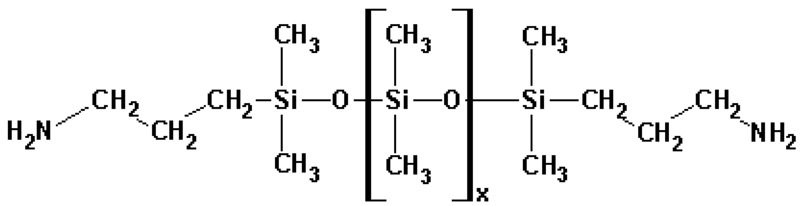

**Formula II**

c. an amine-alkyl modified methylalkylaryl silicone polymer of formula III, such as GP7100 (Genesee):

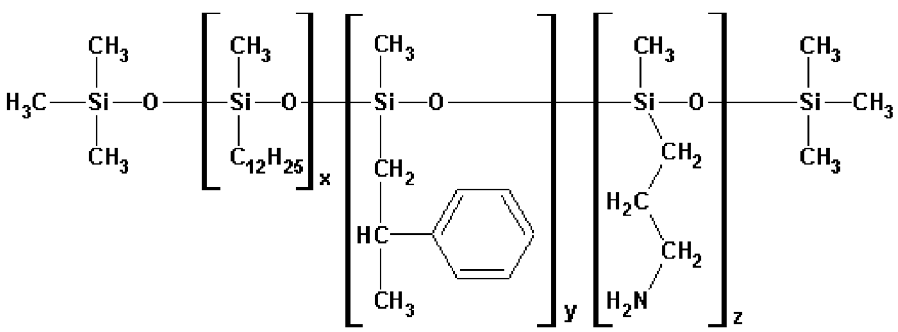

**Formula III**

d. an amino or poly-amino and alkoxy end-blocked silicone of formula IV or V, in some embodiments where x is in the range of from 10-350, preferably where x is about 46, such as GP657 (Formula IV) and GP397 (Formula V) both from Genesee:

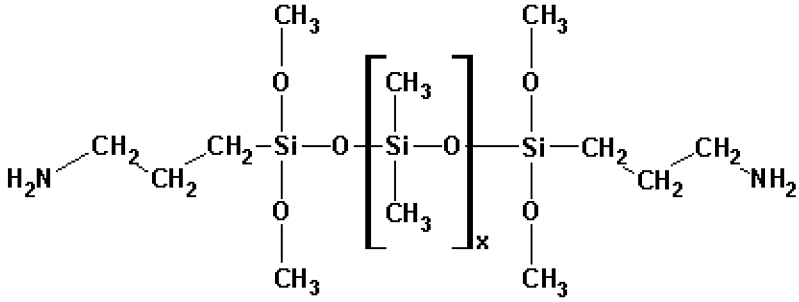

**Formula IV**

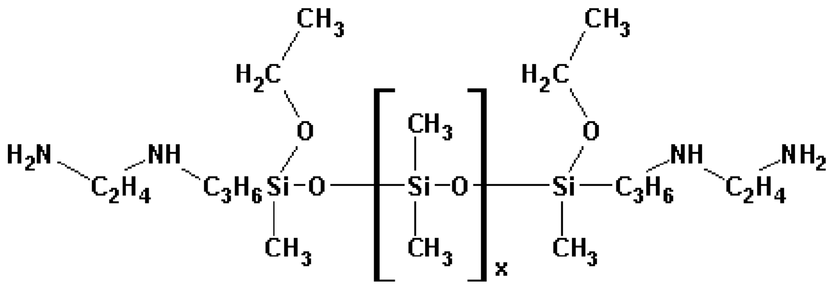

**Formula V**

e. a pendant amino functional and alkoxy end blocked silicone of formula VIa (such as KF857, KF862, KF8001 from Shin-Etsu) or VIb:

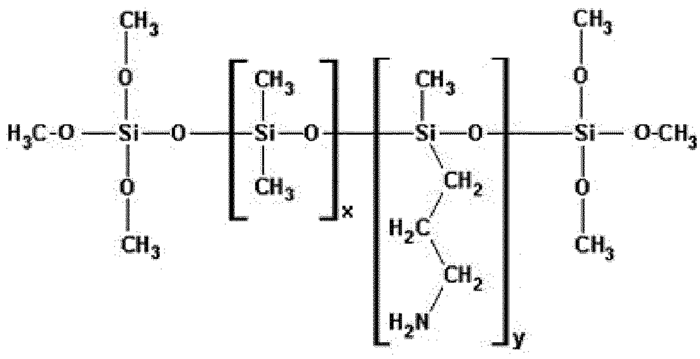

**Formula VIa**

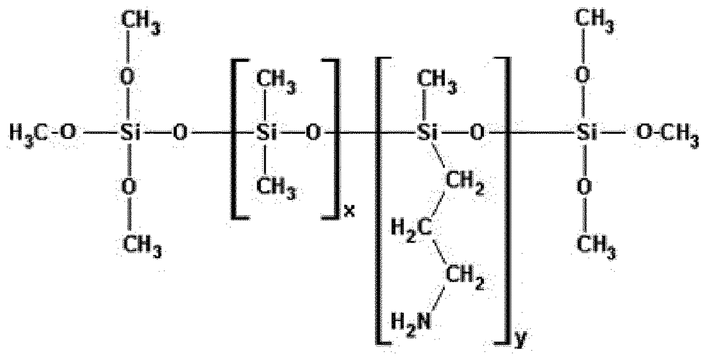

**Formula VIb**

f. a branched amino silicone of formula VII, for example GP 846 and GP1029 (Genesee) and SF 1706 (Momentive):

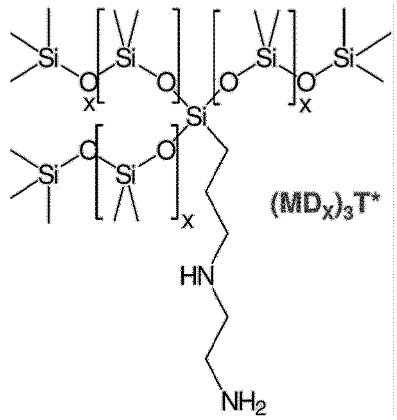

**Formula VII**

g. a hindered amino silicone containing (tetramethylpiperidinyloxy)propyl methyl siloxane group, for example Rhodorsil ® H21654 (Bluestar) or UBS 0822 (Gelest):

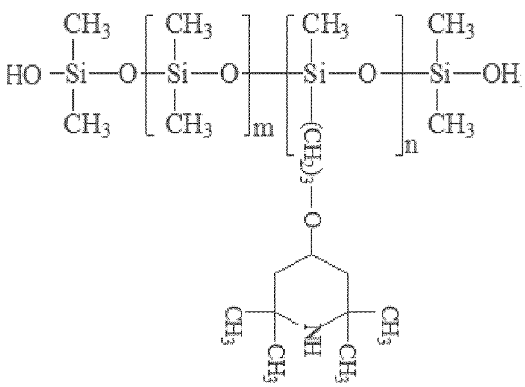

**Formula VIII**

and combinations thereof.

*Reactive silicone polymer*

In some embodiments, a curable polymer composition according to the teachings herein comprises at least

one reactive silicone polymer. A reactive silicone polymer is a silicone polymer having two or more functional groups through which crosslinking can be achieved and/or which provide reactive sites on surfaces of the elastomer resulting from curing the curable polymer composition.

In some embodiments, a curable polymer composition according to the teachings herein includes a single type of reactive silicone polymer. In some embodiments, a curable polymer composition according to the teachings herein includes a combination of at least two different reactive silicone polymers.

A curable polymer composition according to the teachings herein includes any suitable amount of reactive silicone polymer.

Any suitable size of reactive silicone polymer may be used to implement the teachings herein.

Any suitable reactive silicone polymer can be used. In some embodiments, at least one of the reactive silicone polymers in the curable polymer composition is selected from the group consisting of: silanol-functional (especially terminated) silicones; silane-functional (especially terminated) silicones; alkoxy-functional (especially terminated) silicones; amido-functional (especially terminated) silicones; amido-functional (especially terminated) alkoxy-functional (especially terminated) silicones; and combinations thereof.

In some embodiments, the reactive-functional silicone is at least partially fluorinated. In some embodiments, the reactive-functional silicone is perfluorinated.

In some embodiments, at least one of the reactive silicone polymers in the curable polymer composition is selected from the group consisting of: silanol-functional polydialkylsiloxane, for example a silanol-functional polydimethylsiloxane; silanol-functional polyalkylarylsiloxane, for example a silanol-functional polymethylphenylsiloxane; silanol-functional polydiarylsiloxane, for example a silanol-functional polydiphenylsiloxane; silane-functional polydialkylsiloxane, for example a silane-functional polydimethylsiloxane; silane-functional polyalkylarylsiloxane, for example a silane-functional polymethyl-phenylsiloxane; silane-functional polydiarylsiloxane, for example a silane-functional polydiphenylsiloxane; a silane or silanol terminated copolymer of polydimethyl trifluoropropyl-methylsiloxane; alkoxy-terminated polydialkylsiloxane; amido-functional alkoxy-functional polydialkyl-siloxane; polyalkoxysiloxane; and combinations thereof.

In some embodiments, the reactive-functional silicone is at least partially fluorinated. In some embodiments, the reactive-functional silicone is perfluorinated, for example silanol-terminated polytrifluoropropylmethylsiloxane or silane-terminated polytrifluoropropylmethylsiloxane.

*Crosslinker*

In some embodiments, a curable polymer composition according to the teachings herein comprises at least one crosslinker, preferably a condensation-cure crosslinker.

In such embodiments, the curable polymer composition includes any suitable amount of crosslinker. In some embodiments, a curable polymer composition includes a crosslinker in an amount between about 1% and about 15%, between about 2% and about 15%; ; and even between about 2% and about 10% of the weight of the silicone polymers bearing protonatable functional groups.

A curable polymer composition according to the teachings herein includes any suitable type of crosslinker. In some embodiments, the curable polymer composition includes a single type of crosslinker. In some embodiments, the curable polymer composition includes a combination of at least two different crosslinkers.

In some embodiments, at least one (and in some embodiments, substantially all) of the crosslinkers are selected from the group consisting of methylsilicate (tetramethoxysilane, CAS Nr. 681-84-5, $Si(OCH_3)_4$); ethylsilicate (tetraethoxysilane, CAS Nr. 78-10-4, $Si(OC_2H_5)_4$); polymethylsilicates; polyethylsilicates; and combinations thereof.

In some embodiments, the crosslinker consists essentially of tetraethoxysilane and/or polyethylsilicates in an amount between about 1% and about 15% by weight of the silicone polymers bearing protonatable functional groups.

By "polymethylsilicate" is meant oligomers of methylsilicate, having the formula $(CH_3O)_3Si-[O-Si(OCH_3)2]_m-OCH_3$, where m is an integer between 3 and 15, preferably m is an integer between 3 and 10. By "polyethylsilicate" is meant oligomers of ethylsilicate, having the formula $(C_2HsO)_3Si-[O-Si(OC_2H_5)2]_m-OC_2H_5$, where m is an integer between 3 and 15, preferably m is an integer between 3 and 12. Suitable such crosslinkers that are commercially available include PSI-021 and PSI-023 (Gelest Inc) and Ethylsilicate 48 (Colcoat).

*Crosslinking catalyst*

In some embodiments, a curable polymer composition according to the teachings herein further comprises a catalyst suitable for catalyzing the crosslinking of the curable polymer composition, preferably a condensation-cure catalyst.

Such a curable polymer composition includes any suitable type of catalyst. In some embodiments, the curable polymer composition includes a single type of catalyst. In some embodiments, the curable polymer composition includes a combination of at least two different catalysts.

In some embodiments, such a catalyst is selected from the group consisting of tin catalysts, titanate catalysts, chelate titanium, and mixtures thereof.

In some embodiments, the condensation-cure catalyst is a tin catalyst. In some such embodiments, the condensation-cure tin catalyst is selected from the group consisting of dibutyltin bis (acetylacetonate), dioctyl tin stannoxane, stannous octoate, and dioctyl tin bis (acetylacetonate), and combinations thereof.

In some such embodiments, the condensation-cure catalyst is a titanate or chelate titanium catalyst, such as titanium diisopropoxide (bis-2,4-pentanedionate) commercially available as AKT855 from Gelest, titanium diisopropoxide bis(ethylacteoacetate), titanium di-n-butoxide (bis-2,4-pentanedionate), tetrabutyl titanate and tetraoctyl titanate.

In some such embodiments, a curable polymer composition includes a catalyst in an amount of between about 0.1% and about 3%, between about 0.1% and about 2%, between about 0.1% and about 1.6%, between about 0.5% and about 1.8% and even between about 0.8% and about 1.2% of the weight of the silicone polymers bearing protonatable functional groups.

In some embodiments, a curable polymer composition does not include a separate catalyst. In some such embodiments, the amine function acts as an autocatalyst, especially when the curable polymer composition includes highly reactive components such as trialkoxy silane-terminated polymers.

*Antioxidant*

In some embodiments, a curable polymer composition according to the teachings herein further comprises an antioxidant.

Such a curable polymer composition includes any suitable type of antioxidant. In some embodiments, the curable polymer composition includes a single type of antioxidant. In some embodiments, the curable polymer composition includes a combination of at least two different antioxidants.

In some such embodiments, the antioxidant is selected from the group consisting of sterically hindered phenols (such as, for example, Irganox® 1135 (benzenepropanoic acid, 3,5-bis(1,1-dimethylethyl)-4-hydroxy-,C7-C9 branched alkyl ester) (CAS 125643-61-0) from CIBA/BASF); hindered amine light stabilizers; hindered amine functional siloxanes; thioethers; phosphite antioxidants; and mixtures thereof.

The composition may include any suitable amount of antioxidant. In some such embodiments, the curable polymer composition includes an antioxidant in an amount of between about 0.1% and about 3% of the weight of the silicone polymers bearing protonatable functional groups.

*Adhesion Promoter*

As noted above, the release layer of an intermediate transfer member is attached to a body of the intermediate transfer member. In some embodiments with use of an adhesive and in some embodiments without use of an adhesive. To improve such attachment, in some embodiments, a curable polymer composition according to the teachings herein further comprises an adhesion promoter.

Such a curable polymer composition includes any suitable type of adhesion promoter. In some embodiments, the curable polymer composition includes a single type of adhesion promoter. In some embodiments, the curable polymer composition includes a combination of at least two different adhesion promoters.

In some such embodiments, the adhesion promoter comprises a silane. Suitable silanes include silanes described in US Patent 3,697,551.

In some such embodiments, the adhesion promoter comprises an aminosilane (e.g., mono-amino functional silanes such as 3-amino-propyltriethoxysilane and 3-aminopropyltrimethoxysilane, and mixtures thereof and/or polyamino functional silanes such as N-2-aminoethyl-3-aminopropyltrimethoxysilane); an acrylosilane (e.g., methacryloxypropyltrimethoxysilane), an azidosilane (e.g., azidosulfonylhexyltriethoxysilane) and combinations thereof

In some such embodiments, the curable polymer composition includes an adhesion promoter in an amount of between about 0.1% and about 15% by weight of the silicone polymers bearing protonatable functional groups.

*Retardant*

In some embodiments, the curable polymer composition further comprises a retardant (also called a curing inhibitor) e.g., short silanol-terminated polydimethylsiloxane.

Retardants increase the room-temperature shelf-life of a curable polymer composition, increasing workability. Such a retardant may be present in any suitable amount, typically between about 1% and about 5% by weight of the silicone polymers bearing protonatable functional groups.

Intermediate Transfer Member and Body

An intermediate transfer member according to the teachings herein may be any type of intermediate transfer member.

In some embodiments, an intermediate transfer member according to the teachings herein is a rigid drum-type intermediate transfer member. Any embodiment of such a drum-type intermediate transfer member **10** is schematically depicted in Figure 1, including a release layer **12** with an image transfer surface **14**, release layer **12** supported by body **16** that is secured to a supporting cylinder **18** (e.g., an aluminum roller). In some embodiments, a release layer such as **12** is secured directly to a supporting cylinder such as **18**; in such embodiments the supporting cylinder constitutes the body of the intermediate transfer member.

In some such embodiments, a drum-type intermediate transfer member is fashioned as a sheet which is attached to the supporting drum. Typically the sheet is cut to an appropriate size and the laminated structure secured to a rigid (metal, hard plastic) supporting drum, for example, using adhesive.

In some embodiments, an intermediate transfer member according to the teachings herein is a flexible blanket-type intermediate transfer member (also called belt). Any embodiment of such a blanket-type intermediate transfer member **20** is schematically depicted in Figure 2, including a release layer **12** with an image transfer surface **14**, release layer **12** supported by body **16**. In some such embodiments, a blanket-type intermediate transfer member is fashioned as a sheet which ends are joined together to form a loop. The ends may be joined in any suitable method, as known in the art, Depending on the embodiment, the ends may be joined releasably (e.g., zip fastener, hooks, magnets) or permanently (e.g., soldering, welding, adhesive, taping).

A body to which a release layer according to the teachings herein is attached is any suitable body, typically a laminated structure including layers of elastomers each having a different property. A person having ordinary skill in the art is familiar with various types of such bodies and methods of making such bodies. Suitable bodies are discussed, for example, in the co-pending PCT patent application of the Applicant No. PCT/IB2013/051743 (WO 2013/132432), which was filed on the same day as the present application. In some embodiments, a body is configured so that the resulting intermediate transfer member has substantially greater elasticity in the lateral direction than in the longitudinal direction (the printing direction), as described in the afore-mentioned application of the Applicant. Some suitable bodies are commercially available, for example from Trelleborg.

As used herein, the term "printing direction" means a direction from the printing heads that apply ink to the release layer towards the location of the printing substrate.

Specifically, a suitable body typically includes at least one layer selected from the group consisting of a conformational layer, a compressible layer, a thermally-insulating layer, a thermally-conductive layer, an electrically-conductive layer, a low-friction layer, a high-friction layer, a reinforcement layer and a connective layer. In some embodiments, the body consists of a reinforcement layer, a compressible layer, a conformational layer and a layer providing desired frictional drag (e.g., low-friction layer, a high-friction layer). In some embodiments, the body consists of a reinforcement layer, a conformational layer and a layer providing desired frictional drag (e.g., low-friction layer, a high-friction layer).

In Figure 3 is schematically depicted a cross-sectional view of an embodiment of a blanket-type intermediate transfer member 22, including a release layer 12 as described herein. Intermediate transfer member 22 further comprises a body 16, including a reinforcement layer **24**, a compressible layer **26**, a conformational layer **28**, and an adhesive layer **30**.

Figure 4 is schematically depicts a cross-sectional view of an embodiment of a blanket **32** including a release layer **12**, a body **16**, including a reinforcement layer **24**, a compressible layer **26**, and a conformational layer **28**, without an adhesive layer.

*Conformational layer*

A conformational layer is configured to enable an image transfer surface of a release layer of an intermediate transfer member to conform and adapt to the topography of a substrate surface and increases the area of the intermediate transfer member that can be in close proximity to a substrate during impression (the transfer of the residue film to the substrate), thereby improving ink film residue transfer.

A conformational layer is fashioned of any suitable (typically compliant) material or combination of materials, having mechanical properties suitable for the operability of the intermediate transfer member. In some embodiments, a conformational layer is of a material selected from the group consisting of silicone rubber, acrylic rubber (ACM), cured acrylic rubber, hydrogenated nitrile butadiene rubber (HNBR), or combinations thereof.

In some embodiments, a conformational layer has a hardness in the range of from 20 to 65 Shore A. In some embodiments, a conformational layer comprises a soft layer, in some embodiments having a hardness in the range of from 20 to 40 Shore A. In some embodiments, the thickness of a soft conformational layer ranges from about 50 $\mu$m to about 1000 $\mu$m. In some preferred embodiments, the thickness of a soft conformational layer is about 150 $\mu$m.

In some embodiments, a conformational layer comprises a hard layer, in some embodiments having a hardness in the range of from 40 to 65 Shore A. In some embodiments, the thickness of a hard conformational layer ranges from about 5 μm to about 100 μm, from about 10 μm to about 50 μm, and even from about 5 μm to about 30 μm,

In some embodiments, a conformational layer comprises more than one sublayer, each sub-layer optionally having a different hardness. In some such embodiments, a conformational layer comprises both a soft conformational sublayer (substantially as described above for a soft conformational layer) and a hard conformational sublayer (substantially as described above for a hard conformational layer).

In some embodiments, a conformational layer has a glossy surface finish.

*Compressible layer*

A compressible layer provides for at least part of the desired compressibility of an intermediate transfer member which improves transfer of an ink residue film from the image transfer surface of the release layer to the substrate. A compressible layer may improve the contact between the release layer and the substrate by adapting the image transfer surface of the release layer of the intermediate transfer member to inherent geometrical variations of the substrate.

In some embodiment, the compressibility of a compressible layer is at least 10% under a load of P = 2kg/cm$^2$.

An compressible layer is fashioned of any suitable compressible material or compressible combination of materials, having mechanical and optionally thermal properties suitable for the operability of the intermediate transfer member. In some embodiments, a compressible layer comprises (or even consists of) a material selected from the group consisting of silicone rubbers (e.g., room temperature vulcanization RTV and RTV2, liquid silicone LSR, Vinyl Methyl Silicone (VMQ), Phenyl Silicone Rubber (PMQ, PVMQ), fluorosilicone rubber (FMQ, FMVQ), alkyl acrylate copolymer (ACM), ethylene propylene diene monomer (EPDM) rubber, nitrile rubber, void-comprising hydrogenated nitrile butadiene rubber, S-cured and/or peroxide cured rubbers, open-cell rubbers, saturated open-cell rubbers, closed-cell rubbers and combinations thereof. In some embodiments, the rubber is a nitrile rubber having 40-60% (by volume) small voids. In some embodiment, the nitrile rubber is a void-comprising hydrogenated nitrile butadiene rubber (HNBR).

In some embodiments, a compressible layer comprises one or more sponge-like layers. In some embodiments, wherein a compressible layer comprises a single sponge-like layer, the thickness of the compressible layer ranges from about 50 μm to about 1250 μm, from about 100 μm to about 1000 μm, from about 200 μm to about 600 μm, and even from about 300 μm to about 400 μm. In some embodiments, a compressible layer has a thickness of not more than about 500 μm. In some embodiments, a compressible layer is a single sponge layer having a thickness of about 350 μm.

*Thermally-insulating layer*

In some embodiments, an intermediate transfer member is heated during use, *inter alia*, allowing quick evaporation of the carrier of an ink composition. In some such embodiments, an intermediate transfer member is heated from the outside, that is to say, there is a heat source facing the image transfer surface of the release layer. In some such embodiments, it is advantageous that the body of the intermediate transfer member be configured for preventing the transfer of heat through the release layer to dissipate in the body. Thus, in some such embodiments, a body of an intermediate transfer member according to the teachings herein comprises a thermally-insulating layer. In some such embodiments, the thermally-insulating layer has a low thermal conductivity, functioning as a thermal insulator to prevent or reduce undesired heat dissipation through the bulk of the body.

A thermally-insulating layer is fashioned of any suitable thermally-insulating material or thermally-insulating combination of materials.

In some embodiments, a thermally-insulating layer has a thickness of at least 100 micrometers.

*Thermally-conductive layer*

As noted above, in some embodiments, an intermediate transfer member is heated during use, *inter alia,* allowing quick evaporation of the carrier of an ink composition. In some such embodiments, an intermediate transfer member is heated from the inside or from beneath, that is to say, there is a heat source facing the body of the intermediate transfer member, and the heat is transferred through the body, through the release layer to the image transfer surface. In some such embodiments, it is advantageous that the body of the intermediate transfer member be configured for sufficient transfer of heat through the body to the release layer.

Accordingly, in some embodiments, the body of an intermediate transfer member according to the teachings herein comprises a thermally-conductive layer. Typically, such a thermally-conductive layer is configured to facilitate the transfer of heat from the inside of the body towards the image transfer surface of the release layer.

A thermally-conductive layer is fashioned of any suitable thermally-conductive material or thermally-conductive combination of materials. In some embodiments, a thermally-conductive layer has no or only a low amount of air voids.

In some embodiments, a thermally-conductive layer comprises (and in some embodiments substantially consists of) low-void silicone rubber or low-void hydrogenated nitrile butadiene rubber. In some embodiments, a thermally-conductive layer includes thermally-conductive fillers such as alumina, carbon black, and aluminium nitride, typically in particulate form in a continuous matrix, especially a polymer matrix

In some embodiments, a thermally-conductive layer has a thickness of not less than 100 micrometers.

In some embodiments, a thermally-conductive layer comprises or essentially consists of low-void hydrogenated nitrile butadiene rubber.

*Low-friction layer*

In some embodiments, the body of an intermediate transfer member according to the teachings herein comprises a low-friction layer, typically as an innermost layer (furthest from the transfer layer) of a blanket-type intermediate transfer member. In some embodiments, the low-friction layer has a coefficient of friction of less than 3.

Such intermediate transfer members having a low-friction layer as an innermost layer are exceptionally useful for use with printing systems where the intermediate transfer member is mounted on a supporting structure that includes both rolling supports (rollers) and static supports (pins) across which the intermediate transfer member slides. A low-friction layer reduces drag and unwanted frictional heating during printing, and helps reduce wear on the printing device support structure and on the intermediate transfer member. Accordingly, in typical embodiments a low-friction layer also comprises an abrasion-resistant surface for contacting a printing system support structure.

In some embodiments, a low-friction layer is configured to allow heat conduction through the body of the intermediate transfer member, especially for use with printing systems where the intermediate transfer member is heated from the inside. In some such embodiments, the low-friction layer is configured to be sufficiently heat-resistant, allowing intermediate transfer member operating temperatures of up to about 250°C.

A low-friction layer is fashioned of any suitable material or combination of materials, in some embodiments polymers, such as thermoplastic, thermoset and elastomer polymers, including rubbers. In some embodiments, a low-friction layer comprises (or even substantially consists of) a material selected from the group consisting of silicone, polytetrafluoroethylene (e.g., Teflon®), fluorinated rubber (FKM), polyethylene terephthalate (PET), hydrogenated nitrile butadiene rubber (HNBR) and combinations thereof. In some embodiments, a suitable polymer is supplemented with additives providing a low coefficient of friction.

In some embodiments wherein the low-friction layer comprises FKM and/or HNBR, a thin layer (e.g., about 4 microns) of a hard rubber (i.e., hardness 70-80 Shore A), is applied to the image transfer surface of the low-friction layer to provide the required texture. In some embodiments, the low-friction layer has a roughness of between about 4 and about 500 microns. In some embodiments, a suitable roughness is achieved, for example, by buffing or by use of a textured mold before curing of the material making up the low-friction layer, or by inclusion in the material making up the low-friction layer with a filler such as silica or calcium carbonate, having sufficiently large particle size such that particles of the filler are apparent through the surface of the low-friction layer.

In some embodiments, the thickness of a low-friction layer is in the range of from about 1 $\mu$m to about 250 $\mu$m. In some embodiment, the thickness of a low-friction layer is not more than about 100 micrometer, not more than about 50 micrometers and even not more than about 10 micrometers. In some typical embodiments, the thickness is between about 3 and about 10 micrometers, e.g., about 4 to about 5 micrometers.

*High-friction layer*

In some embodiments, the body of an intermediate transfer member according to the teachings herein comprises a high-friction layer, typically as an innermost layer (furthest from the transfer layer) of a blanket-type intermediate transfer member. In some embodiments, the high-friction layer has a coefficient of friction of greater than 3.

Such intermediate transfer members are exceptionally useful for use with printing systems where the intermediate transfer member is mounted substantially exclusively on rolling supports (rollers) and does not substantially slide past any supports (e.g., static pins). Such a high-friction layer facilitates non-slip contact of the intermediate transfer member over the support structure (rollers) of the printing system, ensuring that the rollers have sufficient friction to accurately move the intermediate transfer member.

In some embodiments, a high-friction layer is configured to allow heat conduction through the body of the intermediate transfer member, especially for use with printing systems where the intermediate transfer member is heated from the inside. In some such embodiments, the high-friction layer is configured to be sufficiently heat-resistant, allowing intermediate transfer member operating temperatures of up to about 250°C.

A high-friction layer is fashioned of any suitable material or combination of materials, in some embodiments polymers, such as silicone rubbers (e.g., as listed above). Typically, such materials, such as silicone rubbers are relatively soft, allowing high friction with sufficient mechanical strength and abrasion resistance.

In some embodiments, the thickness of a high-friction layer is in the range of from about 25 μm to about 100 μm and even from about 25 μm to about 50 μm.

*Reinforcement layer*

In some embodiments, the body of an intermediate transfer member comprises a reinforcement layer, configured to provide the intermediate transfer member with mechanical strength. Any suitable reinforcement layer may be used in implementing the teachings herein.

*Fibers*

In some embodiments, a reinforcement layer comprises a plurality of fibers. In some embodiments, at least some of the fibers are predominantly unidirectional fibers. In some embodiments, the unidirectional fibers are oriented substantially parallel to the longitudinal (printing) direction. In some embodiments, the unidirectional fibers are oriented substantially parallel to the lateral direction, that is to say, substantially perpendicular to the longitudinal direction.

*Fabric layers*

In some embodiments, the reinforcement layer comprises at least one layer of fabric fashioned from a plurality of fibers, that is to say at least some of the plurality of fibers constitute a layer of fabric. In some embodiments, at least one layer of fabric comprises one or more fabric ply.

In some embodiments, where a reinforcement layer is of a single fabric layer, the thickness of the reinforcement layer ranges from about 100 μm to about 600 μm, from about 100 μm to about 200 μm, from about 400 μm to about 600 μm, from about 200 μm to about 500 μm, and even from about 450 μm to about 550 μm. In some embodiments, a reinforcement layer with a single fabric layer has a thickness of about 350 μm.

In some embodiments, where a reinforcement layer comprises two distinct fabric layers, the thickness of each fabric layers ranges from about 100 μm to about 600 μm, from about 100 μm to about 200 μm, from about 400 μm to about 600 μm, from about 200 μm to about 500 μm, from about 450 μm to about 550 μm, and even from about 100 μm to about 400 μm.

In some embodiments, a reinforcement layer comprises two fabric layers each having a thickness of between about 50 micrometer and about 350 μm. In some embodiments, a reinforcement layer comprises two fabric layers each having a thickness of about 300 μm. In some embodiments, a reinforcement layer comprises two fabric layers, one having a thickness of about 200 μm and the other having a thickness of about 350 μm.

*Fiber types*

Each layer of fabric is fashioned from any suitable fiber, twisted or non-twisted. The fibers may be in any suitable form including monofilaments, grouped filaments and yarns. In embodiments including a yarn, the yarn may be of a single type of fiber, or a blend of two or more different types of fibers. In some embodiments, at least some of the fibers (and in some embodiments, substantially all of the fibers) making up a given layer of fabric are selected from the group consisting of meta-aramide polymers (e.g., Nomex® fibers), para-aramide polymers (e.g., Kevlar® fibers), nylon-based fibers, twisted nylon based fibers, cotton-based fibers, twisted cotton-based fibers, polyester-based fibers, twisted polyester-based fibers, glass-based fibers, carbon-fiber (graphite) based fibers, and metal-based fibers, or a combination thereof. In some embodiments, all of the layers of fabric are of the same fiber or combination of fibers. In some embodiments, at least one layer of fabric is of substantially different fiber composition.

*Types of fabric*

In some embodiments, at least one fabric layer of the reinforcement layer is a nonwoven fabric.

In some embodiments, at least one fabric layer of the reinforcement layer is a woven fabric. In woven fabrics, there are two distinct sets of fibers interlaced at right angles. The longitudinally-oriented fibers are called the warp while the laterally-oriented fibers are called the weft (the filling). Any suitable weave may be used in implementing such embodiments, for example, in some embodiments, a woven fabric layer has a weave selected from the group consisting of plain weave, twill weave, basket weave, satin weave, leno weave and mock leno weave.

In some embodiments, the fibers of a reinforcement layer are fully or partially embedded in (or impregnated with) a solid (non fibrous) elastomer matrix as known in the art of fabrics. A fully-impregnated fabric is a fabric in which the interstices between the filaments/yarns are completely filled with the matrix. In some embodiments, such impregnation improves thermal conductivity and/or enables a better distribution of the mechanical stress between the reinforcement

layer and adjacent layers and/or improves mechanical properties of the reinforcement layer, such as reducing crimp. Preferably, the elastomer matrix is compatible with (can be bonded to) adjacent layers of the intermediate transfer member. In some embodiments, the elastomer matrix is a thermally-conductive elastomer, for example an elastomer prepared by extrusion such that polymeric chains of the elastomer are oriented in the direction of extrusion. Any suitable elastomer may be used. In some embodiments, a suitable elastomer is selected from the group consisting of silicone rubber, neoprene rubber, hydrogenated nitrile butadiene rubber (HNBR), nitrile butadiene rubber (NBR), alkyl acrylate copolymer (ACM), or ethylene propylene diene monomer (EPDM), or combinations thereof.

*Connective layer*

In some embodiments, the body of an intermediate transfer member according to the teachings herein comprises a connective layer. A connective layer is typically a layer placed between any two functional layers such as described above, and serves to improve adherence therebetween. Specifically, in some embodiments where two functional layers have insufficient mutual adherence, a connective layer able to adequately bond to both is interposed between the two layers. A connective layer is of any suitable thickness. That said, a connective layer is typically between about 100 micrometers and about 300 micrometers thick, more typically between about 150 micrometers and about 250 micrometers thick. In some embodiments, a connective layer is about 200 micrometer thick.

For example, in some embodiments, the body of an intermediate transfer member comprises two or more distinct reinforcement layers. In some such embodiments, there is a connective layer between the two distinct reinforcement layers.

Method of Printing

An intermediate transfer member including a release layer according to the teachings herein can be used with any suitable printing device and/or to implement any suitable printing method to transfer an ink residue film to any suitable substrate.

A typical suitable method of printing comprises: during a printing cycle when a specific image is printed on a specific substrate, to:

a. apply one or more inks (each ink comprising coloring agent in a liquid carrier) as a plurality of ink droplets to form an ink image on the image transfer surface of a release layer of an intermediate transfer member;
b. while the ink image is being transported by the intermediate transfer member, evaporating the carrier to leave an ink residue film including the coloring agents on the image transfer surface of the release layer; and
c. transferring the residue film from the image transfer surface of the release layer to the substrate, thereby printing the desired image on the substrate. In preferred embodiments, the inks are applied as droplets by ink jetting, in the usual way, although other methods of applying ink make also be used.

Typical indirect printing systems suitable to implement the above printing method are described in co-pending PCT application of the applicant Nos. PCT/IB2013/051716 (WO2013/132418), PCT/IB2013/051717 (WO2013/132419) and PCT/IB2013/051718 (WO2013132420), each of which were filed on the same day as the present application.

*Ink compositions*

An intermediate transfer member including a release layer according to the teachings herein can be used with any suitable ink, especially suitable inks having a coloring agent and resin binder in an aqueous carrier. In such embodiments, the residue film that remains on the image transfer surface of the release layer after evaporation of the carrier that is subsequently transferred to the substrate to produce the desired image on the substrate includes both the coloring agent and the resin binder.

In some embodiments, such inks suitable for use in conjunction with the teachings herein contain a coloring agent (e.g., water-soluble or water-dispersible nanoparticulate pigments) and a water-dispersible or water-soluble organic-polymeric resin.

Any suitable coloring agent may be used.

Any suitable water-dispersible or water-soluble resin binder may be used. As discussed above, it is preferred that the resin binder include functional groups that are negatively charged or chargeable by proton transfer in an aqueous solution. Suitable negatively charged or chargeable groups include carboxylated acids such as having carboxylic acid groups (-COOH), acrylic acid groups ($-CH_2=CH-COOH$), methacrylic acid groups ($-CH_2=C(CH_3)-COOH$) and sulfonates such as having sulfonic acid groups ($-SO_3H$).

Such charged or chargeable groups can be covalently bound to polymeric backbones and preferably be water

soluble or dispersible. Suitable such resin binders may for example comprise acrylic-based resins such as an acrylic polymer and an acrylic-styrene copolymer having carboxylic acid functional groups. Further details on suitable ink compositions that may be used according to the teachings herein are disclosed PCT patent application No. PCT/IB2013/051755 (WO 2013/132439) of the Applicant, which was filed on the same day as the present application.

As noted hereinabove, in some embodiments when such chargeable aqueous inks are used together with a release layer according to the teachings herein, superior printing results are achieved. As noted above, without wishing to be held to any one theory it is currently believed that when the ink droplets are applied to the image transfer surface, the ink droplets flatten on impact with the image transfer surface as a result of momentum. Apparently, proton-transfer occurs from the proton-donating components of the ink (that becomes negatively charged) to the protonatable functional groups apparent on the image transfer surface (that become positively charged). Apparently, this charging at least partially counteracts the tendency of the ink droplets to adopt a more spherical shape, so that the ink droplets retain a more flattened and less spherical shape, that is hypothesized to lead to the observed superior printing results.

## EXAMPLES

Aspects of the teachings herein were experimentally demonstrated.

### Materials

The following materials were used in the experiments:

*GP-657 (Genesee)*

An amine/alkoxy functional silicone fluid:

$$(NH_2(CH_2)_3\text{-}Si(OCH_3)_2\text{-}[Si(CH_3)_2O]_{46}\text{-}Si(OCH_3)_2\text{-}(CH_2)_3NH_2),$$

substantially a linear polydimethylsiloxane terminated at either end with an amine/ alkoxy function that includes a 3-propyl amine terminus. GP-657 has a molecular weight of 3700 g/mol and an amine number of 54. Each GP-657 molecules includes two terminal primary amine functional groups.

*GP-4 (Genesee)*

A pendant-amine / dimethyl copolymer silicone fluid:

$$(CH_3\text{-}[Si(CH_3)_2O)]_{59} \text{ - } [SiCH_3((CH_2)_3NH_2)O]_4 \text{ - } Si(CH_3)_3),$$

substantially a linear polydimethylsiloxane terminated at a first end with a methyl group, and at the second end with four (3-aminopropyl)methylsiloxane monomers terminated with a trimethyl silyl group. GP-4 has a molecular weight of 4922 g/mol and an amine number of 90. Each GP-4 molecule includes four side-chain primary amine functional groups.

*GP-965 (Genesee)*

CAS# 106214-84-0, an amine end-blocked silicone fluid:

$$(NH_2(CH_2)_3 \text{ - } [Si(CH_3)_2O]_{11} \text{ - } Si(CH_3)_2 \text{ - } (CH_2)_3NH_2),$$

substantially a X-long linear polydimethylsiloxane terminated at each end with a 3-amino propyl functional group. GP-965 has a molecular weight of 988 g/mole and an amine number of 200. Each GP-965 molecule includes two terminal primary amine functional groups.

*GP-397 (Genesee)*

An amine/alkoxy functional silicone fluid:

$$H_2N\text{-}C_2H_4\text{-}NH\text{-}C_3H_6\text{-}Si(CH_3)(OC_2H_5)O\text{-}[Si(CH_3)_2O]_{46}\text{-}[Si(CH_3)(OC_2H_5)]\text{-}C_3H_6\text{-}NH\text{-}C_2H_4\text{-}H_2N,$$

substantially a linear polydimethylsiloxane terminated at both ends with an amine/ alkoxy function that includes a

$C_3H_6$-NH-$C_2H_4$-$NH_2$ terminus. GP-397 has a molecular weight of 3798 g/mol and an amine number of 116. Each GP-397 molecule includes two terminal primary amine functional groups and two secondary amine functional groups.

*GP-846 (Genesee)*

An amine-alkoxy end-blocked branched silicone that contains both amine alkyl and hydrolyzable alkoxy groups, having an amine number of 110.

*KF-862 (Shin Etsu)*

Side-chain amino dual methoxy ended reactive silicone fluid:

$$CH_3O\text{-}Si(CH_3)_2\text{-}O\text{-}[Si(CH_3)_2)m]\text{-}Si(CH_2)(RNH_2)O]n\text{-}Si(CH_3)_2OCH_3$$

having a functional group equivalent molecular weight of 1900 g/mol. Applicant measured the amine number to be 53.

*KF-857 (Shin Etsu)*

Side-chain amino dual methoxy ended reactive silicone fluid:

$$CH_3O\text{-}Si(CH_3)_2\text{-}O\text{-}[Si(CH_3)_2)m]\text{-}Si(CH_2)(RNH_2)O]n\text{-}Si(CH_3)_2OCH_3$$

having a functional group equivalent molecular weight of 790 g/mol. Applicant measured the amine number to be 127.

*SF 1706 (Momentive)*

A branched silicone fluid that contains amine functional and dimethylpolysiloxane units. Applicant measured the amine number to be 47.

*Rhodorsil H21654 (BlueStar)*

A hindered amino silicone containing (tetramethylpiperidinyloxy)propyl methyl siloxane groups, having an amine number of 40.

*DMS S27 (Gelest)*

CAS 70131-67-8 is a silanol terminated polydimethylsiloxane, having a molecular weight of 18000 g/mol.

PLY 7810 *(Nusil Silicone Technology, Carpinteria, CA, USA)*

A silanol terminated fluorosilicone.

*PSI 021 (Gelest)*

CAS 68412-37-3 a polydiethylsiloxane (tetraethoxysilane, $Si(OCH_2CH_3)_4$), having a molecular weight of 192 g/mol used as a crosslinker.

*Ethylsilicate48 (Colcoat)*

A decamer of tetraethoxysilane: $(H_5C_2O)$-$[Si(OC_2H_5)_2]_{10}(OC_2H_5)$ having a molecular weight of 1270 g/mol used as a crosslinker.

*SIA0780 (Gelest)*

CAS 96550-26-4 is 6-Azidosulfonylhexyltriethoxysilane, MW of 354 g/mol.

*Tin catalyst (TIB Chemicals AG (Mannheim, Germany)*

The condensation cure catalyst, dioctyl tin bis (acetylacetonate).

*Irganox 1135 (BASF)*

CAS 125643-61-0 is benzenepropanoic acid, 3,5-bis (1,1-dimethyl-ethyl)-4-hydroxy-C7-C9 branched alkyl esters having a molecular weight of 390 g/mol is an antioxidant used to provide thermal stability to a polymer.

*Agerite® Stalite® (Vanderbilt Chemicals LLC, Norwalk, CT, USA)*

A mixture of octylated diphenylamines that serve as an antioxidant.

*Darocur 1173® (Ciba/BASF)*

A photoinitiator 2-hydroxy 2-methyl 1-phenyl 1-propanol.

*Dynasylan® AMEO (Evonik)* 3-Aminopropyltriethoxysilane

General Framework

An intermediate transfer member body was commandited from Trelleborg including:

a) a 40 micrometer thick low-friction inner layer;
b) contacting a 250 micrometer thick reinforcement layer including a 200 micrometer thick woven 200 gram cotton fabric impregnated with ACM rubber;
c) contacting a 350 micrometer thick compressible layer of ACM rubber sponge (P=2 $kg/cm^2$);
d) contacting a 100 micrometer conductive layer of rubber having a resistivity of 500 Ohm/cm; and
e) contacting a 100 micrometer conformational layer of soft cured ACM rubber, of 30 Shore A.

The upper surface of conformational layer of cured acrylic rubber defined the surface to which embodiments of release layers according to the teachings herein were attached, with or without the use if adhesive.
Embodiments of curable polymer compositions were prepared and used to prepare release layers by attaching to the intermediate transfer member body to make an intermediate transfer member. The intermediate transfer members were tested in various ways as detailed hereinbelow.

Amino Number

**[0210]** The amino number of each curable polymer composition was calculated by summing the amino number of each constituent amino-functional polymer times the weight percent of that polymer.

Pot Life

The pot life of the curable polymer compositions, *i.e.* the period of time for which a composition remained flowable, was determined by weighing about 10g of a composition into an aluminium plate and allowing it to cure at room temperature. Samples were withdrawn periodically with a pipette and checked for flowability. It is preferable for the pot life of the composition to be at least 10 minutes.

Release layers

In some instances, a uniform 10 micrometer thick layer of a prepared curable polymer composition was applied directly on the outer surface of an intermediate transfer member body described above using a Meyer Rod.
In other instances, first a uniform 1-5 micrometer thick layer of adhesive composition:

48.4% mol *Dynasylan*® GLYMO 45 (3-glycidyl-oxypropyltrimethoxysilane);
41% mol *Dynasylan*® MEMO 40 (methacryloxypropyl trimethoxy-silane);
7% mol Tyzor® 10 (Tetrabutyl titanate catalyst); and
3.6% mol SIA 0780 from Gelest (6-azidosulfonylhexyl triethoxysilane)

was applied on the outer surface of an intermediate transfer member body described above using a Meyer Rod, followed by application of a uniform 10 micrometer thick layer of a prepared curable polymer composition on the applied adhesive layer using a Meyer Rod.

A reference intermediate transfer was made by making a composition of 100 parts DMS-S27 (silanol terminated polydimethylsiloxane from Gelest) were combined with 9 parts Ethylsilicate48 crosslinker (Colcoat) and 0.8 parts dioctyl tin bis (acetylacetonate) condensation cure catalyst (TIB Chemicals) that was attached with the use of adhesive as described above to a body.

The incipient blanket body portion with applied curable polymer composition and optional adhesive composition was kept for at least 1 hour at room temperature (RT) and relative humidity between 30-70%, and then cured for at least 5 minutes at about 140°C, during which time the curable polymer composition and optional adhesive composition cured to form a layer having a uniform thickness of about 12 μm of elastomer, as described herein, constituting a release layer of the intermediate transfer blanket. The thus fully-cured laminated structure was allowed to cool. The exact curing conditions of the exemplified curable compositions and release layer thereof are indicated below in the Tables.

After complete curing, the incipient reference intermediate transfer members were formed into a loop by seaming the two short ends.

Gloss and abrasion resistance

Gloss and abrasion resistance of the image transfer surface of release layers was tested by measuring Gloss Loss as follows:
3M Scotch® transparent tape was used to remove dust particles from the image transfer surface of the release layer of a swatch of the intermediate transfer member.

The gloss of the thus-cleaned image transfer surface was measured using a hand-held gloss meter (BYK-Gardner USA, Columbia, Maryland, USA) at a 75° angle of incidence. Gloss was measured at 3 different locations on the image transfer surface. "Original Gloss" was calculated as the average of the three measurements.

The swatch of intermediate transfer member was mounted on the sample stage of a "Rub-Test" abrasion tester (Test Machine Inc.) fitted with 3M 261X 9 μm Lapping Film.

The abrasion tester was operated at 1000 cycles at a load of 1 kgf.

The swatch was removed and "Abraded Gloss" measured again as described above.

The Gloss Loss was calculated as:

$$\text{Gloss Loss} = 100 - ((\text{OriginalGloss} - \text{Abraded Gloss}) / \text{OriginalGloss}) \times 100$$

Adhesion of a release layer to a body

The bonding of a given release layer to a bodywas tested by rubbing with a finger. Results were given based on a scale from 1 to 4, wherein:

1 = poor adhesion (elastomer easily removed from the rubber, rubber surface visible after rubbing);
2 = fair adhesion (elastomer removed with difficulty, rubber surface partially to totally visible after rubbing);
3 = good adhesion (elastomer removed with great effort, only small or localized areas of the rubber layer are visible); and
4 = excellent adhesion (elastomer cannot be removed with rubbing).

Contact angle

A small sample of a given intermediate transfer member was used to determine the apparent contact angle of the image release surface using a drop-size analyser (DSA1000 from Kruss GmbH, Hamburg, Germany). A drop of distilled water was deposited on the release layer using a micro-syringe, and an image of the water drop at the image transfer surface was obtained with a camera. The apparent contact angle was then determined using the DSA 1000 program.

Printing

*Ink Composition*

A nanoparticle pigment concentrate was made by combining:

1.3% (w/w) Carbon Black Mogul L (Cabot Corp., Boston, MA, USA) as pigment
12.5% (w/w) Joncryl HPD 296 (35.5 % water solution) (BASF) as resin
15% (w/w) Glycerol (Aldrich)
0.2% (w/w) Zonyl FSO-100
1% (w/w) Diethanolamine
Water (distilled) Balance to 100 %

The pigment, water, Joncryl HPD 296 and diethanolamone were mixed and milled using a homemade milling machine. The milling may be performed using any one of many commercially available milling machines deemed suitable by one of ordinary skill in the art. The progress of milling was controlled on the basis of particle size measurement (Malvern, Nanosizer). The milling was stopped when the particle size (D50) reached 70 nm. Then the rest of materials were added to the pigment concentrate and mixed. After mixing the ink was filtered through a 0.5 micron filter. The resulting ink composition had a viscosity of 9 cP and a surface tension of 24 mN/m.

*Release-layer pretreatment solution*

Commercially-available PEI (polyethylenimine having an average molecular weight of 25,000 as Lupasol® WF from BASF Corporation, Florham Park, New Jersey, USA; CAS 9002-98-6) was diluted with triple-distilled water to give a 0.2% w/w PEI release layer pretreatment solution. The amine number of the solution was measured to be 1800.

*Printing*

An ink cartridge of a Dimatic DMP-2800 inkjet printer (Fujifilm, Akasaka, Minato, Tokyo, Japan) was charged with the ink composition.

To test printing performance, an intermediate transfer member was fashioned as a patch of approximately 200 mm x 300 mm. The patch was fixed image transfer surface facing upwards to a hotplate (with clamps) that was heated to 150°C.

The patch with hotplate was place under the printer

For reference B, a 1 micrometer thick layer of the release-layer pretreatment solution was applied to completely cover the image transfer surface of the release layer. Specifically, the solution was sprayed at the image transfer surface of the release layer that then evened to the desired thickness using a chrome evening roller. After about 30 seconds, the solvent of the release-layer pretreatment solution had evaporated leaving a layer (estimated to be 1 nm thick) of PEI as a chemical agent coating the image transfer surface of the release layer. The ink droplets were subsequently applied to the PEI layer.

For reference A as well as the tested release layers, the ink was applied directly to the image transfer surface.

The printer was operated, in the usual way, to deposit a plurality of 12 or 14 picoliter ink droplets on the image transfer surface of the release layer, forming an ink image while the intermediate transfer member was maintained at 150°C.

After about 30 seconds, the aqueous carrier of the ink had evaporated, living an ink residue film on the image transfer surface of the release layer.

Serving as a substrate, an A4 (210mm x 297 mm) sheet of paper (135 gram Gloss by Condat, le Plessis Robinson, France) was wrapped around a 210mm long - 48 mm radius stainless steel cylinder. The cylinder with paper was manually rolled along the image transfer surface of the release layer so that the ink residue film was transferred to the paper.

Print quality was evaluated by measuring the dot size of the ink transferred to the paper substrate where greater dot size indicates higher print quality.

Print quality was also evaluated by measuring the optical density of the ink transferred to the paper substrate using a Model 528 SpectroDensitometer (X-Rite, Grand Rapids, Michigan, USA), where optical density (OD) was measured at 50% and 100% coverage, wherein percentage coverage refers to the amount of ink used in halftoning, wherein 0% denotes white paper (no ink) and 100% denotes a solid black (full ink).

TABLE A: Examples 1-9

Nine different embodiments of curable polymer compositions were prepared as listed in Table A, and used to prepare embodiments of release layers.

| | Ref A | Ref B Ref A +PEI | 1 | 2 | 3 | 4 | 5 | 6 | 7 | 8 | 9 |
|---|---|---|---|---|---|---|---|---|---|---|---|
| Adhesive | Yes | Yes | Yes | Yes | Yes | No | Yes | No | No | No | No |
| GP- 657 | - | - | - | - | 20 | 100 | 100 | 100 | 100 | 100 | 100 |
| GP-4 | - | - | - | 15 | - | - | - | - | - | - | - |
| GP-965 | - | - | 20 | - | - | - | - | - | - | - | - |
| GP-397 | - | - | - | - | - | - | - | - | - | - | - |
| DMS-S27 | 100 | 100 | 100 | 100 | 100 | 10 | 10 | 10 | 12 | - | - |
| PLY 7810 | - | - | - | - | - | - | | | | 10 | 5 |
| PSI 021 | - | - | 10 | 10 | 10 | 10 | 10 | 10 | 10 | 10 | 10 |
| Ethylsilicate 48 | 10 | 10 | - | - | - | - | - | - | - | - | - |
| SIA0780 | - | - | - | - | - | - | | 1 | 1 | 1 | 1 |
| Tin Catalyst | 0.8 | 0.8 | - | - | - | - | - | - | - | - | - |
| Calculated Amine number | NA | NA | 31 | 11 | 8 | 45 | 45 | 45 | 44 | 45 | 46 |
| Curing | | | | | | | | | | | |
| curing process step 1 at RT (hours) | 1 | 1 | 1 | 1 | 1 | 1 | 1 | 12 | 1 | 72 | 72 |
| curing process step 2 140°C | 1 h | 1 h | 1 h | 1 h | 1 h | 5mi n | 5min | 5min | 5min | 1 h | 1 h |
| Properties | | | | | | | | | | | |
| release layer thickness (micrometer) | 10 | 10 | 10 | 10 | 10 | 10 | 10 | 10 | 10 | 10 | 10 |
| Pot life (min) | 45 | 45 | 2 | 4 | 7 | 6 | 7 | 6 | 5 | 23 | 13 |
| adhesion | 4 | 4 | 4 | 4 | 4 | 4 | 4 | 4 | 4 | 4 | 4 |
| apparent contact angle | 110° | - | 110° | 110° | 110° | 110° | 110° | 110° | 110° | 110° | 110° |
| Gloss | 88 | NA | NA | NA | NA | NA | NA | 88 | NA | NA | 88.5 |
| printed dot size (μm) with 12pl ink droplet | 36-38 | 48 | - | 34 | 38 | 51 | 45-48 | 53-54 | 50 | 51 | 53-54 |
| OD at 50% coverage | 0.2 | 0.63 | - | - | - | 0.6 | 0.47 | 0.52 | 0.56 | 0.57 | 0.59 |
| OD at 100% coverage | 0.33 | 1.4-1.6 | - | - | - | 1.5-1.9 | | 1.96 | 1.32 | 1.97 | 1.4 |

Table B: Examples 10 and 11

Two curable polymer compositions were prepared, and used to make an intermediate transfer member including an image transfer surface, Examples 10 and 11 in Table B.

**TABLE B**

| | Ref A | Ref B (Ref A + PEI) | **10** | **11** |
|---|---|---|---|---|
| **Composition** | Table A | Table A | | |
| GP-657 | - | - | 100 | 80 |
| GP-397 | - | - | - | 20 |
| calculated amine number | NA | NA | 54 | 66.4 |
| **Adhesive** | yes | yes | no | no |
| **Curing** | | | | |
| curing process step 1 at RT | 1 h | - | 1 h | 1 h |
| curing process step 2 | 1 h 140°C | - | 1 h 150°C | 1 h 150°C |
| **Properties** | | | | |
| release layer thickness (micrometer) | 10 | 10 | 10 | 10 |
| pot life (min) | 45 | 45 | >40 | >120 |
| adhesion | 4 | 4 | 4 | 4 |
| apparent contact angle | 110° | - | 110° | 113° |
| gloss | 89 | - | 89 | 89 |
| printed dot size (μm) with 12pl ink droplet | 32 | 41.5 | 45 | >45 |

Table C: Example 12

A curable polymer composition was prepared, and used to make an intermediate transfer member including an image transfer surface, Example 12 in Table C. Example 12 is similar to Example 11 but included a crosslinker (that reduced pot life of the composition, but increased speed of production) and an antioxidant (which decreased oxidation of the amino functional groups during curing).

**TABLE C**

| | Ref A | Ref B (Ref A + PEI) | **12** |
|---|---|---|---|
| **Composition** | Table A | Table A | |
| GP-657 | - | - | 80 |
| GP-397 | - | - | 20 |
| PSI-021 | - | - | 2 |
| Irganox® 1135 | - | - | 1 |
| calculated amine number | NA | NA | 65 |
| **Curing** | | | |
| curing process step 1 at RT | 1 h | 1 h | 1 h |
| curing process step 2 | 1 h 140°C | 1 h 140°C | 1 h 140°C |
| **Properties** | | | |
| release layer thickness (micrometer) | 10 | 10 | 8 |
| pot life (min) | 45 | - | 60 |

(continued)

| Properties | | | |
|---|---|---|---|
| adhesion | 4 | 4 | 1-2 |
| Apparent contact angle | 110° | - | 110° |
| Gloss | 89 | - | 89 |
| printed dot size ($\mu$m) with 12pl ink droplet | 32 | 41.5 | 45 |
| printed dot size ($\mu$m) with 14pl ink droplet | 69 | 68 | 69 |

Table D: Examples 13a and 13b

The curable polymer composition of sample 12 was prepared, and used to make two intermediate transfer member including an image transfer surface, Examples 13a and 13b in Table D.

A heat-curable adhesive composition was prepared from 95% w/w *Dynasylan*® AMEO with 5% w/w SIA0780.

During curing, the composition and adhesive were irradiated for 7 minutes using a 250W infrared bulb (from Osram GmbH, Munich, Germany).

In Example 13a, the release layer was 6 micrometer thick and attached to the body of the intermediate transfer member using a 1 micrometer thick layer of the adhesive. In Example 13a, the incipient intermediate transfer layer was applied as a fluid to a cured (by heating) layer of adhesive.

In Example 13b, the release layer was 5 micrometer thick and attached to the body of the intermediate transfer member using a 1 micrometer thick layer of the adhesive. In Example 13b, the incipient intermediate transfer layer was applied as a fluid to a still-fluid layer of adhesive composition.

**TABLE D**

| | Ref A | **12** | **13a** | **13b** |
|---|---|---|---|---|
| **Adhesive** | yes | no | yes | yes |
| **Curing** | | | | |
| curing process step 1 at RT | 1 h | 1 h | 1 h | 1 h |
| curing process step 2 | 1 h 140°C | 1 h 140°C | IR 7 min | IR 7 min |
| curing process step 3 | - | - | 1 h 140°C | 1 h 140°C |
| **Properties** | | | | |
| release layer thickness (micrometer) | 10 | 8 | 6 | 5 |
| pot life (min) | 45 | 60 | 60 | 60 |
| adhesion | 4 | 1-2 | 4 | 3 |
| apparent contact angle | 110° | 110° | 110° | 110° |
| gloss | 89 | 89 | 89 | 88.5 |
| printed dot size ($\mu$m) with 12pl ink droplet | 32 | 45 | 53.7 | 52.5 |
| optical density at 50% coverage | 0.67 | 0.64 | 0.63 | 0.55 |
| optical density at 100% coverage | 2.17 | 1.96 | 2.3 | 2.3 |

Table E: Example 14

The curable polymer composition of sample 12 was prepared, and used to make an intermediate transfer member including an image transfer surface, Example 14 in Table E.

A light-curable adhesive composition was prepared from 95% w/w *Dynasylan*® AMEO with 5% w/w Darocur 1173 photoinitiator.

During curing, the composition and adhesive were irradiated for 7 minutes using a 250W infrared bulb (from Osram).

**TABLE E**

| | Ref A | **12** | **14** |
|---|---|---|---|
| **Adhesive** | yes | no | yes |
| **Curing** | | | |
| curing process step 1 at RT | 1 h | 1 h | 1 h |
| curing process step 2 | 1 h 140°C | 1 h 140°C | IR 7 min |
| | Ref A | **12** | **14** |
| curing process step 3 | - | - | 1 h 140°C |
| **Properties** | | | |
| release layer thickness (micrometer) | 10 | 8 | 10 |
| pot life (min) | 45 | 60 | - |
| adhesion | 4 | 1-2 | 4 |
| apparent contact angle | 110° | 110° | 110° |
| gloss | 89 | 89 | 89.5 |
| printed dot size ($\mu$m) with 12pl ink droplet | 32 | 54.8 | 53 |
| OD at 50% coverage | 0.67 | 0.64 | - |
| OD at 100% coverage | 2.17 | 1.96 | - |

Table F: Examples 15-18

Four curable polymer compositions were prepared, and used to make an intermediate transfer member including an image transfer surface (Examples 15-18 in Table F). Examples 15-18 included amino-functional silicones comprising pendant amino functions. The adhesive used was as in Example 14.

**TABLE F**

| | Ref B | 12 | 15 | 16 | 17 | 18 |
|---|---|---|---|---|---|---|
| **Composition** | Table A | | | | | |
| GP- 657(RNH2 end chain) | | 80 | - | - | - | - |
| GP-397 (RNH2 end chain) | | 20 | - | - | - | - |
| KF-862 (RNH2 side chain) | | - | 100 | 80 | 60 | - |
| KF-857 (RNH2 end chain) | | - | - | 20 | 40 | 100 |
| PSI-021 (crosslinker) | | 2 | 6 | 6 | 6 | 6 |
| Agerite stalite | | - | - | 1 | - | - |
| Irganox® 1135 | | 1 | - | - | - | - |
| Tin catalyst | | - | 2 | 1 | 2 | 2 |
| calculated amine number | - | 65 | 53 | 67 | 82.6 | 127 |
| **Adhesive** | yes | no | yes | yes | yes | yes |
| **Curing** | | | | | | |
| curing process step 1 at RT | 1 h | 1 h | 1 h | 1 h | 1 h | 1 h |
| curing process step 2 | 1 h 140°C | 1 h 140°C | IR 7 min | IR 7 min | IR 7 min | IR 7 min |
| curing process step 3 | - | - | 1 h 140°C | 1 h 140°C | 1 h 140°C | 1 h 140°C |

(continued)

| Properties | | | | | | |
|---|---|---|---|---|---|---|
| | Ref B | 12 | 15 | 16 | 17 | 18 |
| printed dot size (μm) with 12pl ink droplet | 48.9 | 47.2 | 47.8 | 48.1 | 49.7 | 47.2 |
| OD on 80% solid | 1.12 | 0.56 | 0.95 | 1.25 | N/A | 1.32 |
| OD on 100% solid | 1.53 | 0.93 | 1.52 | 1.56 | N/A | 1.74 |

Table G: Examples 19-20

Two curable polymer compositions were prepared, and used to make an intermediate transfer member including an image transfer surface, Examples 19-20 in Table G. Examples 19-20 included amino-functional silicones comprising branched amino silicone. The adhesive used was as in Example 14.

**TABLE G**

| | Ref B | 12 | 19 | 20 |
|---|---|---|---|---|
| **Composition** | Table A | | | |
| GP- 657(RNH2 end chain) | | 80 | - | - |
| GP-397 (RNH2 end chain) | | 20 | 20 | - |
| KF-862 (RNH2 side chain) | | - | - | 20 |
| GP-846 (branched) | | - | 80 | - |
| SF 1706 (branched) | | - | - | 80 |
| PSI-021 (crosslinker) | | 2 | 5 | 6 |
| Irganox® 1135 | | 1 | - | - |
| Tin catalyst | | - | 0.5 | 1 |
| calculated amine number | | 65 | 96 | 48.2 |
| **Adhesive** | yes | no | yes | yes |
| **Curing** | | | | |
| curing process step 1 at RT | 1 h | 1 h | 1 h | 1 h |
| curing process step 2 | 1 h 140°C | 1 h 140°C | IR 7 min | IR 7 min |
| curing process step 3 | - | - | 1 h 140°C | 1 h 140°C |
| **Properties** | | | | |
| printed dot size (μm) with 12pl ink droplet | 48.9 | 47.2 | 46.4 | 45.8 |
| OD on 80% solid | 1.12 | 0.56 | 0.76 | 0.95 |
| OD on 100% solid | 1.53 | 0.93 | 1.41 | 1.61 |

Table H: Example 21

A curable polymer composition was prepared, and used to make an intermediate transfer member including an image transfer surface, Example 21 in Table H. Example 21 included amino-functional silicones comprising hindered amino-silicone. The adhesive used was as in Example 14.

**TABLE H**

| | Ref B | 12 | 21 |
|---|---|---|---|
| **Composition** | Table A | | |
| GP- 657(RNH2 end chain) | | 80 | - |
| GP-397 (RNH2 end chain) | | 20 | 20 |
| Rhodorsil H21654 (Hindered Amine) | | - | 100 |
| PSI-021 (crosslinker) | | 2 | 10 |
| Irganox® 1135 | | 1 | - |
| Tin catalyst | | - | 1 |
| calculated amine number | | 65 | 28 |
| **Adhesive** | yes | no | yes |
| **Curing** | | | |
| curing process step 1 at RT | 1 h | 1 h | 1 h |
| curing process step 2 | 1 h 140°C | 1 h 140°C | IR 7 min |
| curing process step 3 | - | - | 1 h 140°C |
| **Properties** | | | |
| printed dot size (μm) with 12pl ink droplet | 48.9 | 47.2 | 45.2 |
| OD on 80% solid | 1.12 | 0.56 | 0.38 |
| OD on 100% solid | 1.53 | 0.93 | 0.4 |

Advancing/Receding contact angles

The advancing contact angle and receding contact angle of some of the above examples were tested in the usual way. It was found that all the tested examples had an advancing contact angle of between 105° and 115° and a receding contact angle of between 65° and 75°.

Testing release of residue film from an image transfer surface

As discussed above, after ink droplets are applied to an image transfer surface of a release layer and the ink carrier evaporated, it is necessary to transfer the resulting ink residue film to a substrate to effect printing. Generally, it is preferred that an image transfer surface of a release layer have a high releasability of an ink residue film to ensure complete transfer of the residue film to the substrate. To evaluate the releasability of ink from image transfer surfaces of release layer examples, the following method was used.

An ink residue film was formed on the image transfer surface of a release layer to be tested, substantially as described above by printing with the inkjet printer as described above.

Abutting lengths of 25 mm wide standard pressure-sensitive adhesive tape (Tesa 7475) was applied by light finger pressure on top of the residue film to completely cover the release layer.

The release layer with residue film and tape was cleanly cut into 25 mm wide 175 mm long test strips using a sharp knife.

Each test strip was rolled twice in each direction using a FINAT test roller at a speed of approximately 10 mm per second.

Each thus-rolled test strip was fixed in a tensile tester, and the tensile tester activated to strip the tape from the release layer at an angle of peel of 180° at a rate of 300mm per minute, with release force measured at 10 mm intervals. The average of 5 measurements was calculated.

It was found that all the tested examples required a release force of between 0.4 and 3.1 N.

Discussion of the results

In Examples 1-7, amino-functional silicone polymers were added to a standard reactive silicone polymer, silanol-terminated polydimethylsiloxane DMS-S27 (see Table A).

At low concentrations of amino-functional silicone polymer (15-20 parts per hundred of the reactive silicone polymer, Examples 1-3), no difference in printed dot size was seen as compared to Reference A, indicating insufficient flattening of the ink droplets on the image release surface by the ink. Further, poor release of the ink residues to the substrate was obtained using amino silicone fluids which did not crosslink (Examples 2 and 3).

Examples 4-7 included predominantly the GP-657, which is both an amino-functional silicone polymer and a reactive silicone polymer (through the dimethoxy functions). It was believed that releasability of the ink residues to the substrate necessitated an amount of the DMS-27, and to ensure crosslinking, a crosslinker (PSI-021 from Gelest) was added. Surprisingly a dot size of greater than 50μ was obtained for all the Examples 4-7, without any substantial negative effects on the ink residue releasability, as determined by percentage transfer of the ink residue with no memory on the image transfer surface. It is noted that the dot size becomes smaller when the proportion of DMS-S27 increases (Examples 6 and 7). At levels of DMS-S27 above 12 parts per hundred, the dot size obtained is similar to that of Reference A.

In Examples 8 and 9, a silanol terminated polytrifluoropropylmethylsiloxane (fluorosilicone PLY 7810) was used instead of silanol terminated polydimethylsiloxane (DMS-S27). The fluorosilicone cured much more slowly than the dimethylsilicone and increased the pot life to 23min, while providing dot size of greater than 50μ.

Examples 10 and 11 showed excellent print quality, with dot size and release similar to that obtained with Reference B.

Example 12 showed excellent print quality, similar to that obtained with Reference B. The curable polymer composition of Example 12 (which included an antioxidant) was found to be less sensitive to degradation during heat curing compared to that of Example 11.

Examples 13 and 14 demonstrated significant improvement of adhesion of the release layer to the body of the blanket using an adhesive layers (heat-activated and UV-activated, respectively), without degrading the printing quality.

Examples 15-18 demonstrated that the use of side-chain amino functional silicone allow to achieve higher amine number curable polymer compositions. Better print quality (higher optical density) was obtained with higher amine number.

Examples 19-20 demonstrated the use of branched amino silicone that give better print quality than end-chain aminosilicones.

Example 21 show that hindered aminosilicones do not allow a good print quality, possibly due to low amino number.

In conclusion, it appears that the print quality of a release layer is related to the amine number of the curable polymer composition from which it is made.

It appears that side-chain or branched aminosilicones give higher print quality than terminal aminosilicones.

It is appreciated that certain features of the invention, which are, for clarity, described in the context of separate embodiments, may also be provided in combination in a single embodiment. Conversely, various feature is of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

Although the invention has been described in conjunction with specific embodiments thereof, it is evident that many alternatives, modifications and variations will be apparent to those skilled in the art. Accordingly, it is intended to embrace all such alternatives, modifications and variations that fall within the scope of the appended claims.

Citation or identification of any reference in this application shall not be construed as an admission that such reference is available as prior art to the invention.

Section headings are used herein to ease understanding of the specification and should not be construed as necessarily limiting.

## Claims

**1.** A method of preparing a release layer of an intermediate transfer member for use with a printing system, comprising:

a) forming a layer of a curable polymer composition at a thickness of between about 0.1 μm and about 120 μm, as an incipient release layer, wherein about means ±10%; and
b) curing said layer of said curable polymer composition,

thereby preparing a release layer of an intermediate transfer member,
wherein said curable polymer composition includes:
at least one silicone polymer bearing protonatable functional groups having a pKb of not more than 6;
wherein said protonatable functional groups include at least one nitrogen atom, said protonatable functional groups selected from the group consisting of primary amines, secondary amines, tertiary amines, indoles, imidazoles, pyridines, purines, guanidines, amides and ureas;
said curable polymer composition having an amine number between 10 and 250.

**2.** The method of claim 1, further comprising:

providing a body of an intermediate transfer member having a surface;
forming said layer of curable polymer composition directly on said surface of said body,

so that subsequent to said curing, said release layer is directly attached to said surface of said body, without an adhesive.

**3.** The method of claim 1, further comprising:

providing a body of an intermediate transfer member having a surface;
forming an adhesive layer on said surface of said body; and
forming said layer of curable polymer composition on said adhesive layer,

wherein subsequent to said curing, said release layer is attached to said surface of said body, through said adhesive layer.

**4.** The method of any one of claims 1 to 3, said curable polymer composition having an amine number of at least 30.

**5.** The method of any one of claims 1 to 3, said curable polymer composition having an amine number of at least 40.

**6.** The method of any one of claims 1 to 3, wherein said pKb of said protonatable functional groups of said at least one silicone polymer is not more than 5.

**7.** The method of any one of claims 1 to 6, said silicone polymer selected from the group consisting of:

an amino-functional polydialkysiloxane;
an amino-functional polyalkyarylsiloxane;
an amino-functional polydiarysiloxane;
a copolymer methylaminoalkyl dialkyl polysiloxane;
an amino-functional alkoxy-functional polydialkylsiloxane; and
combinations thereof.

**8.** The method of any one of claims 1 to 6, wherein said release layer has an image transfer surface which has an apparent contact angle, with distilled water, of not less than 90°, and not more than 140°.

**9.** The method of claim 8, wherein said apparent contact angle is between 100° and 120°.

**10.** An intermediate transfer member for use with a printing system, comprising:

a release layer having an image transfer surface;
said release layer attached to a body supporting said release layer,

wherein apparent on said image transfer surface are protonatable functional groups having a pKb of not more than 6, and optionally, not less than 1;
said release layer fashioned of an elastomer made of a cross-linked curable polymer composition having, as a raw ingredient prior to crosslinking:

at least one silicone polymer bearing protonatable functional groups having a pKb of not more than 6;
wherein said protonatable functional groups are selected from the group consisting of primary amines, secondary

amines, tertiary amines, indoles, imidazoles, pyridines, purines, guanidines, amides and ureas;
said curable polymer composition having an amine number between 10 and 250.

**11.** The intermediate transfer member of claim 10, wherein said release layer has an image transfer surface which has an apparent contact angle, with distilled water, of not less than 90°, and not more than 140°.

**12.** The intermediate transfer member of claim 11, wherein said apparent contact angle is between 100° and 120°.

**13.** The intermediate transfer member of claim 10, wherein said at least one silicone polymer bearing said protonatable functional groups makes up between about 2% and about 98% by weight of the curable polymer composition wherein about means ±10%.

**14.** The intermediate transfer member of any one of claims 10 to 12, said at least one silicone polymer being an amino-functional silicone polymer in which said protonatable functional groups include amines;
said at least one said amino-functional silicone polymer selected from the group consisting of:

an amino-functional polydialkysiloxane;
an amino-functional polyalkyarylsiloxane;
an amino-functional polydiarysiloxane;
a copolymer methylaminoalkyl dialkyl polysiloxane;
an amino-functional alkoxy-functional polydialkylsiloxane; and
combinations thereof.

**15.** The intermediate transfer member of any one of claims 10 to 14, said curable polymer composition having an amine number of at least 30.

## Patentansprüche

**1.** Verfahren zur Herstellung einer Trennschicht eines intermediären Übertragungselements zur Verwendung mit einem Drucksystem, umfassend:

a) Ausbilden einer Schicht einer härtbaren Polymerzusammensetzung mit einer Dicke zwischen etwa 0,1 μm und etwa 120 μm als inzipiente Trennschicht, wobei etwa ±10% bedeutet; und
b) Härten der Schicht der härtbaren Polymerzusammensetzung, wodurch eine Trennschicht eines intermediären Übertragungselements hergestellt wird,

wobei die härtbare Polymerzusammensetzung folgendes aufweist:
wenigstens ein Silikonpolymer, das protonierbare funktionelle Gruppen mit einer pKb von nicht mehr als 6 aufweist; wobei die protonierbaren funktionellen Gruppen wenigstens ein Stickstoffatom aufweisen, wobei die protonierbaren funktionellen Gruppen ausgewählt sind aus der Gruppe bestehend aus primären Aminen, sekundären Aminen, tertiären Aminen, Indolen, Imidazolen, Pyridinen, Purinen, Guanidinen, Amiden und Harnstoffen;
wobei die härtbare Polymerzusammensetzung eine Aminzahl zwischen 10 und 250 aufweist.

**2.** Verfahren nach Anspruch 1, ferner umfassend:

Bereitstellen eines Körpers eines intermediären Übertragungselements mit einer Oberfläche;
Ausbilden der Schicht einer härtbaren Polymerzusammensetzung direkt auf der Oberfläche des Körpers;

so dass die Trennschicht nach dem Härten ohne Klebstoff direkt an der Oberfläche des Körpers angebracht wird.

**3.** Verfahren nach Anspruch 1, ferner umfassend:

Bereitstellen eines Körpers eines intermediären Übertragungselements mit einer Oberfläche;
Ausbilden einer Klebstoffschicht auf der Oberfläche des Körpers; und
Ausbilden der Schicht einer härtbaren Polymerzusammensetzung auf der Klebstoffschicht,

wobei die Trennschicht nach dem Härten über die Klebestoffschicht an der Oberfläche des Körpers angebracht wird.

**4.** Verfahren nach einem der Ansprüche 1 bis 3, wobei die härtbare Polymerzusammensetzung eine Aminzahl von wenigstens 30 aufweist.

**5.** Verfahren nach einem der Ansprüche 1 bis 3, wobei die härtbare Polymerzusammensetzung eine Aminzahl von wenigstens 40 aufweist.

**6.** Verfahren nach einem der Ansprüche 1 bis 3, wobei die pKb der protonierbaren funktionellen Gruppen des wenigstens einen Silikonpolymers nicht größer ist als 5.

**7.** Verfahren nach einem der Ansprüche 1 bis 6, wobei das Silikonpolymer ausgewählt ist aus der Gruppe bestehend aus:

einem aminofunktionellen Polydialkysiloxan;
einem aminofunktionellen Polyalkyarylsiloxan;
einem aminofunktionellen Polydiarylsiloxan;
einem Copolymer-Methylaminoalkyldialkylpolysiloxan;
einem aminofunktionellen, alkoxyfunktionellen Polydialkylsiloxan; und
Kombinationen davon.

**8.** Verfahren nach einem der Ansprüche 1 bis 6, wobei die Trennschicht eine Bildübertragungsoberfläche aufweist, die mit destilliertem Wasser einen scheinbaren Kontaktwinkel von nicht weniger als 90° und nicht mehr als 140° aufweist.

**9.** Verfahren nach Anspruch 8, wobei der scheinbare Kontaktwinkel zwischen 100° und 120° liegt.

**10.** Intermediäres Übertragungselement zur Verwendung mit einem Drucksystem, umfassend:

eine Trennschicht mit einer Bildübertragungsoberfläche;
wobei die Trennschicht an einem die Trennschicht tragenden Körper angebracht ist;

wobei auf der Bildübertragungsoberfläche protonierbare funktionelle Gruppen mit einer pKb von nicht mehr als 6 und optional von nicht weniger als 1 manifestiert sind;
wobei die Trennschicht aus einem Elastomer aus einer vernetzten härtbaren Polymerzusammensetzung ausgebildet ist, die als Ausgangsstoff vor der Vernetzung folgendes aufweist:

wenigstens ein Silikonpolymer, das protonierbare funktionelle Gruppen mit einer pKb von nicht mehr als 6 aufweist;
wobei die protonierbaren funktionellen Gruppen wenigstens ein Stickstoffatom aufweisen, wobei die protonierbaren funktionellen Gruppen ausgewählt sind aus der Gruppe bestehend aus primären Aminen, sekundären Aminen, tertiären Aminen, Indolen, Imidazolen, Pyridinen, Purinen, Guanidinen, Amiden und Harnstoffen;
wobei die härtbare Polymerzusammensetzung eine Aminzahl zwischen 10 und 250 aufweist.

**11.** Intermediäres Übertragungselement nach Anspruch 10, wobei die Trennschicht eine Bildübertragungsoberfläche aufweist, die mit destilliertem Wasser einen scheinbaren Kontaktwinkel von nicht weniger als 90° und nicht mehr als 140° aufweist.

**12.** Intermediäres Übertragungselement nach Anspruch 11, wobei der scheinbare Kontaktwinkel zwischen 100° und 120° liegt.

**13.** Intermediäres Übertragungselement nach Anspruch 10, wobei das wenigstens eine Silikonpolymer, das die protonierbaren funktionellen Gruppen aufweist, zwischen etwa 2% und etwa 98% des Gewichts der härtbaren Polymerzusammensetzung ausmacht, wobei etwa ±10% bedeutet.

**14.** Intermediäres Übertragungselement nach einem der Ansprüche 10 bis 12, wobei das wenigstens eine Silikonpolymer ein aminofunktionelles Silikonpolymer ist, wobei die protonierbaren funktionellen Gruppen Amine aufweisen; wobei das wenigstens eine aminofunktionelle Silikonpolymer ausgewählt ist aus der Gruppe bestehend aus:

einem aminofunktionellen Polydialkysiloxan;

einem aminofunktionellen Polyalkyarylsiloxan;
einem aminofunktionellen Polydiarylsiloxan;
einem Copolymer-Methylaminoalkyldialkylpolysiloxan;
einem aminofunktionellen, alkoxyfunktionellen Polydialkylsiloxan; und
Kombinationen davon.

**15.** Intermediäres Übertragungselement nach einem der Ansprüche 10 bis 14, wobei die härtbare Polymerzusammensetzung eine Aminzahl von wenigstens 30 aufweist.

**Revendications**

**1.** Procédé de préparation d'une couche de libération d'un élément de transfert intermédiaire à utiliser avec un système d'impression, comprenant les étapes consistant à :

a) former une couche d'une composition polymère durcissable à une épaisseur comprise entre environ 0,1 $\mu$m et environ 120 $\mu$m, en tant que couche de libération naissante, environ signifiant $\pm$10 % ; et
b) durcir ladite couche de ladite composition polymère durcissable,

préparant ainsi une couche de libération d'un élément de transfert intermédiaire, ladite composition polymère durcissable comprenant :

au moins un polymère de silicone portant des groupes fonctionnels protonables ayant un pKb inférieur ou égal à 6 ;
lesdits groupes fonctionnels protonables comprenant au moins un atome d'azote, lesdits groupes fonctionnels protonables étant choisis dans le groupe constitué par les amines primaires, amines secondaires, amines tertiaires, indoles, imidazoles, pyridines, purines, guanidines, amides et urées ;
ladite composition polymère durcissable ayant un indice d'amine compris entre 10 et 250.

**2.** Procédé selon la revendication 1, comprenant en outre les étapes consistant à :

fournir un corps d'un élément de transfert intermédiaire ayant une surface ;
former ladite couche de composition de polymère durcissable directement sur ladite surface dudit corps,
de sorte qu'après ledit durcissement, ladite couche de libération soit directement fixée à ladite surface dudit corps, sans adhésif.

**3.** Procédé selon la revendication 1, comprenant en outre les étapes consistant à :

fournir un corps d'un élément de transfert intermédiaire ayant une surface ;
former une couche adhésive sur ladite surface dudit corps ; et
former ladite couche de composition polymère durcissable sur ladite couche adhésive,
après ledit durcissement, ladite couche de libération étant fixée à ladite surface dudit corps, par ladite couche adhésive.

**4.** Procédé selon l'une quelconque des revendications 1 à 3, ladite composition polymère durcissable ayant un indice d'amine d'au moins 30.

**5.** Procédé selon l'une quelconque des revendications 1 à 3, ladite composition polymère durcissable ayant un indice d'amine d'au moins 40.

**6.** Procédé selon l'une quelconque des revendications 1 à 3, ledit pKb desdits groupes fonctionnels protonables dudit au moins un polymère de silicone n'étant pas supérieur à 5.

**7.** Procédé selon l'une quelconque des revendications 1 à 6, ledit polymère de silicone étant choisi dans le groupe constitué par :

un polydialkysiloxane à fonction aminé ;
un polyalkyarylsiloxane à fonction aminé ;

un polydiarysiloxane à fonction aminé ;
un polysiloxane dialkyl méthylaminoalkyl copolymère ;
un polydialkylsiloxane à fonction amine à fonction alcoxy ; et
une combinaison de ceux-ci.

**8.** Procédé selon l'une quelconque des revendications 1 à 6, ladite couche de libération ayant une surface de transfert d'image qui a un angle de contact apparent, avec de l'eau distillée, supérieur ou égal à 90° et inférieur ou égal à 140°.

**9.** Procédé selon la revendication 8, ledit angle de contact apparent étant compris entre 100° et 120°.

**10.** Élément de transfert intermédiaire destiné à être utilisé avec un système d'impression, comprenant :

une couche de libération ayant une surface de transfert d'image ;
ladite couche de libération étant fixée à un corps supportant ladite couche de libération,
des groupes fonctionnels protonables ayant un pKb inférieur ou égal à 6 et, éventuellement supérieur ou égal à 1, étant apparents sur ladite surface de transfert d'image ;
ladite couche de libération formée d'un élastomère fait d'une composition polymère réticulé durcissable ayant, comme ingrédient brut avant la réticulation :

au moins un polymère de silicone portant des groupes fonctionnels protonables ayant un pKb inférieur ou égal à 6 ;
lesdits groupes fonctionnels protonables étant choisis dans le groupe constitué par les amines primaires, amines secondaires, amines tertiaires, indoles, imidazoles, pyridines, purines, guanidines, amides et urées ;
ladite composition polymère durcissable ayant un indice d'amine compris entre 10 et 250.

**11.** Élément de transfert intermédiaire selon la revendication 10, ladite couche de libération ayant une surface de transfert d'image qui a un angle de contact apparent, avec de l'eau distillée, supérieur ou égal à 90 ° et inférieur ou égal à 140°.

**12.** Élément de transfert intermédiaire selon la revendication 11, ledit angle de contact apparent étant compris entre 100° et 120°.

**13.** Élément de transfert intermédiaire selon la revendication 10, ledit au moins un polymère de silicone portant lesdits groupes fonctionnels protonables constituant entre environ 2 % et environ 98 % en poids de la composition de polymère durcissable, environ signifiant ±10 %.

**14.** Élément de transfert intermédiaire selon l'une quelconque des revendications 10 à 12, ledit au moins un polymère de silicone étant un polymère de silicone à fonction amine, lesdits groupes fonctionnels protonables comprenant des aminés ;
ledit au moins un dit polymère de silicone à fonction amine étant choisi dans le groupe constitué de :

un polydialkysiloxane à fonction aminé ;
un polyalkyarylsiloxane à fonction aminé ;
un polydiarysiloxane à fonction aminé ;
un polysiloxane dialkyl méthylaminoalkyl copolymère ;
un polydialkylsiloxane à fonction amine à fonction alcoxy ; et
une combinaison de ceux-ci.

**15.** Élément de transfert intermédiaire selon l'une quelconque des revendications 10 à 14, ladite composition polymère durcissable ayant un indice d'amine d'au moins 30.

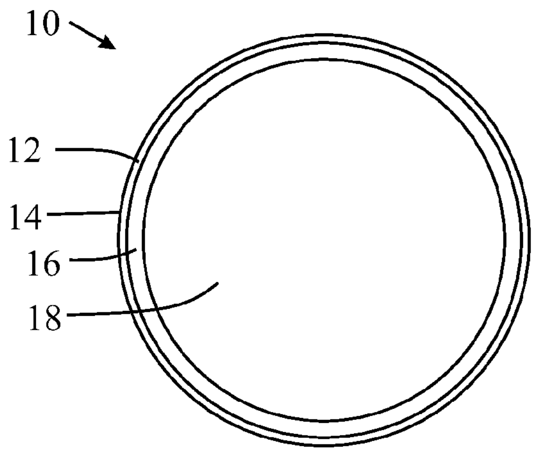


Figure 1

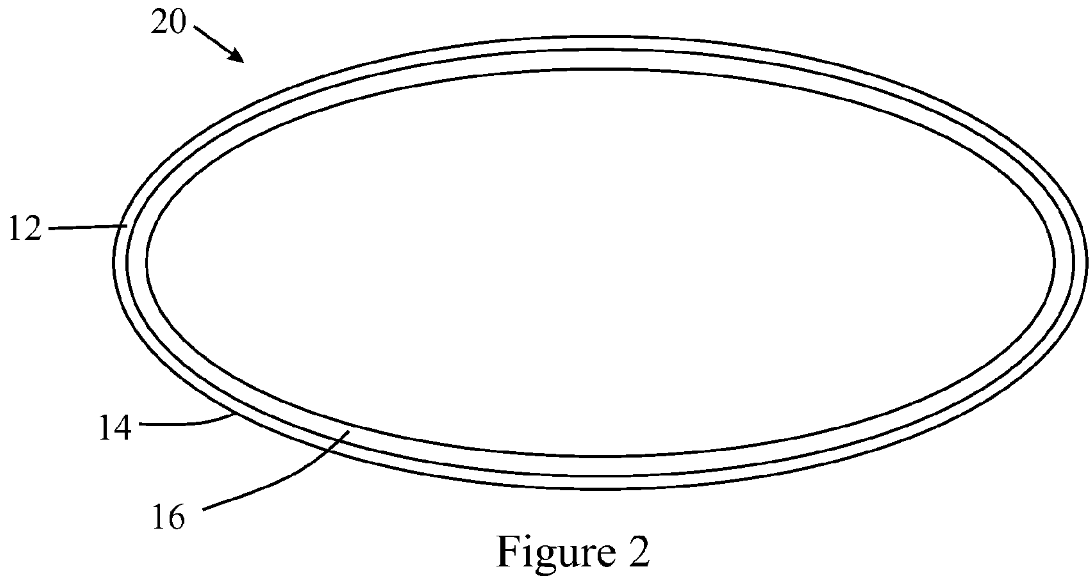


Figure 2

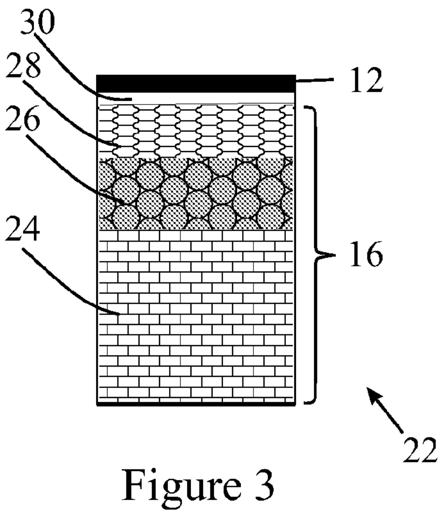


Figure 3

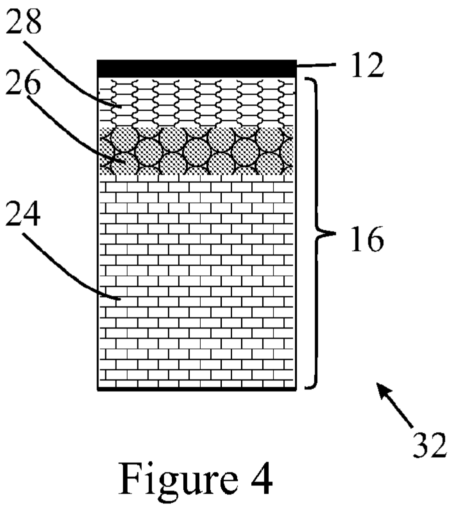


Figure 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6586100 B
- US 2010247818 A
- WO 2013051755 W
- WO 2013132439 A
- WO 2013000757 W
- WO 2013132339 A
- US 3697551 A
- US 4401500 A
- US 20020197481 A
- US 20080138546 A
- WO 2002094912 A
- WO 2010042784 PCT
- WO 2013051743 W
- WO 2013132432 A
- WO 2013051716 W
- WO 2013132418 A
- WO 2013051717 W
- WO 2013132419 A
- WO 2013051718 W
- WO 2013132420 A


### Non-patent literature cited in the description


- *CHEMICAL ABSTRACTS,* 681-84-5
- *CHEMICAL ABSTRACTS,* 78-10-4
- *CHEMICAL ABSTRACTS,* 125643-61-0
- *CHEMICAL ABSTRACTS,* 106214-84-0
- *CHEMICAL ABSTRACTS,* 70131-67-8
- *CHEMICAL ABSTRACTS,* 68412-37-3
- *CHEMICAL ABSTRACTS,* 96550-26-4
- *CHEMICAL ABSTRACTS,* 9002-98-6